# EUROPEAN PATENT APPLICATION

(11) **EP 4 545 583 A1**
(43) Date of publication of application: **30.04.2025**
(21) Application number: 23827303.1
(22) Date of filing: 26.06.2023
(51) Int. Cl.: C08G 59/30, C09J 163/00

(54) **HEAT-CURABLE COMPOSITION, CURED ARTICLE, ADHESIVE AGENT, AND HEAT-CURABLE COMPOSITION PRODUCTION METHOD**

(30) Priority: 24.06.2022 JP 2022102086
(71) Applicant: Kagoshima University, Kagoshima-shi, Kagoshima 890-8580 (JP); SHIN-ETSU CHEMICAL CO., LTD., Tokyo 1000005 (JP)
(72) Inventor: KANEKO, Yoshiro, Kagoshima-shi, Kagoshima 890-8580 (JP); NAKAGAWA, Hideo, Tokyo 100-0005 (JP); OZAI, Toshiyuki, Annaka-shi, Gunma 379-0224 (JP); AKETA, Takashi, Annaka-shi, Gunma 379-0224 (JP)
(74) Representative: v. Bezold & Partner Patentanwälte - PartG mbB
(86) International application number: PCT/JP2023/023478
(87) International publication number: WO 2023/249123

(57) **Abstract**

The heat-curable composition according to the present disclosure includes: a first component that contains a siloxane having an epoxy group; and a second component that contains at least one of a phenol having a structure in which a ring-opening functional group (excluding a hydroxy group) that is a functional group having an action of ring-opening the epoxy group is bound to a benzene ring, or an acyclic aliphatic compound having a structure in which the ring-opening functional group is bound to an end. The heat-curable composition production method according to the present disclosure includes: the first component preparation step of preparing a first component that contains a siloxane having an epoxy group; the second component preparation step of preparing a second component that contains at least one of a phenol having a structure in which a ring-opening functional group (excluding a hydroxy group) that is a functional group having an action of ring-opening the epoxy group is bound to a benzene ring, or an acyclic aliphatic compound having a structure in which the ring-opening functional group is bound to an end; and the mixing step of mixing the first component and the second component.

## Description

### Technical Field

The present disclosure relates to a heat-curable composition, a cured article, an adhesive agent, and a heat-curable composition production method.

### Background Art

As disclosed in Patent Literature 1, heat-curable compositions containing an epoxy mixture and a curing agent are known. Patent Literature 1 discloses an epoxy group-containing siloxane and an alicyclic carboxylic acid anhydride as the epoxy mixture and the curing agent, respectively.

### Citation List

### Patent Literature

[Patent Literature 1] Unexamined Japanese Patent Application Publication No. 2015-187209

### Summary of Invention

### Technical Problem

An objective of the disclosure is to provide novel heat-curable composition, cured article, adhesive agent, and heat-curable composition production method.

### Solution to Problem

The heat-curable composition according to the present disclosure includes:
a first component that contains a siloxane having an epoxy group; and
a second component that contains at least one of a phenol having a structure in which a ring-opening functional group (excluding a hydroxy group) that is a functional group having an action of ring-opening the epoxy group is bound to a benzene ring, or an acyclic aliphatic compound having a structure in which the ring-opening functional group is bound to an end.

The siloxane constituting the first component may be a cyclic or linear siloxane that has plural side chains containing the epoxy group.

The side chains may each contain a chain hydrocarbon group between a silicon atom constituting a siloxane bond in the siloxane and the epoxy group.

The first component may further contain a bisphenol-type epoxy having a structure in which an epoxy-containing group containing an epoxy group is introduced to each of a pair of phenyl groups constituting a bisphenol, and
the ring-opening functional group may have an action of ring-opening not only the epoxy group of the siloxane but also the epoxy group of the bisphenol-type epoxy.

Based on the position of a carbon atom to which the ring-opening functional group is bound in the benzene ring constituting the phenol, a phenolic hydroxy group may be bound to at least one of carbon atoms at the 3-position, the 4-position, and the 5-position.

Only hydrogen atoms may be bound to carbon atoms at the 2-position and the 6-position of the benzene ring constituting the phenol.

The ring-opening functional group may be a carboxy group.

The acyclic aliphatic compound may further contain a hydroxy group.

A molar ratio of the second component with respect to the epoxy group contained in the first component may be higher than 0 but 1 or lower.

The cured article according to the present disclosure is a cured article obtained by curing the above-described heat-curable composition according to the present disclosure.

The adhesive agent according to the present disclosure is an adhesive agent containing the above-described heat-curable composition according to the present disclosure, wherein
the first component and the second component exist in the form of a mixture thereof.

The adhesive agent according to the present disclosure is an adhesive agent containing the above-described heat-curable composition according to the present disclosure, wherein
the first component and the second component exist in a state of being separated from each other, and are mixed at the time of use.

The heat-curable composition production method according to the present disclosure includes:
a first component preparation step of preparing a first component that contains a siloxane having an epoxy group;
a second component preparation step of preparing a second component that contains at least one of a phenol having a structure in which a ring-opening functional group (excluding a hydroxy group) that is a functional group having an action of ring-opening the epoxy group is bound to a benzene ring, or an acyclic aliphatic compound having a structure in which the ring-opening functional group is bound to an end; and
a mixing step of mixing the first component and the second component.

### Advantageous Effects of Invention

According to the present disclosure, novel heat-curable composition, cured article, adhesive agent, and heat-curable composition production method are provided.

### Brief Description of Drawings

FIG. 1 is a flow chart of the heat-curable composition production method according to one embodiment;
FIG. 2A is a conceptual diagram illustrating the chemical structure of a cyclic siloxane used as the first component according to one embodiment;
FIG. 2B is a conceptual diagram illustrating the chemical structure of a linear siloxane used as the first component according to another embodiment;
FIG. 3 is a conceptual diagram illustrating the chemical structure of a bisphenol-type epoxy used as the first component according to yet another embodiment;
FIG. 4 is a conceptual diagram illustrating the constitutions of the second component used in Examples A to G;
FIG. 5 is a conceptual diagram illustrating the constitutions of the second component used in Examples H to J;
FIG. 6 is a conceptual diagram illustrating the constitutions of the second component used in Examples K to M;
FIG. 7 is a conceptual diagram illustrating the constitutions of the second component used in Examples O to V;
FIG. 8 is a conceptual diagram illustrating the steps of producing the heat-curable compositions according to Example A;
FIG. 9 is a conceptual diagram illustrating the procedure for preparing an evaluation sample;
FIG. 10 is a graph showing the Fourier transform infrared (FT-IR) spectra of the heat-curable compositions according to Example A;
FIG. 11 is a conceptual diagram illustrating the post-heating chemical structures of the heat-curable compositions according to Example A;
FIG. 12 is a conceptual diagram illustrating the steps of producing the heat-curable compositions according to Example B;
FIG. 13 is a conceptual diagram illustrating the steps of producing the heat-curable compositions according to Example N; and
FIG. 14 is a conceptual diagram illustrating the steps of producing the heat-curable compositions according to Example W.

### Description of Embodiments

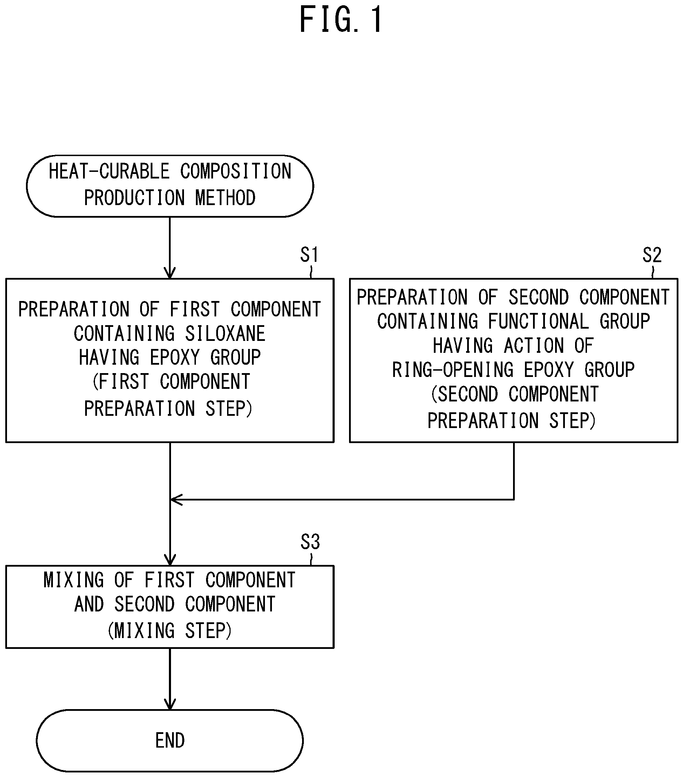

The heat-curable composition production method according to one embodiment is described below with reference to FIG. 1.

First, a first component that contains a siloxane having plural epoxy groups is prepared (first component preparation step S1). The siloxane constituting the first component is a cyclic siloxane or a linear siloxane. The first component may further contain a bisphenol-type epoxy. The first component preferably consists of the siloxane, or the siloxane and the bisphenol-type epoxy.

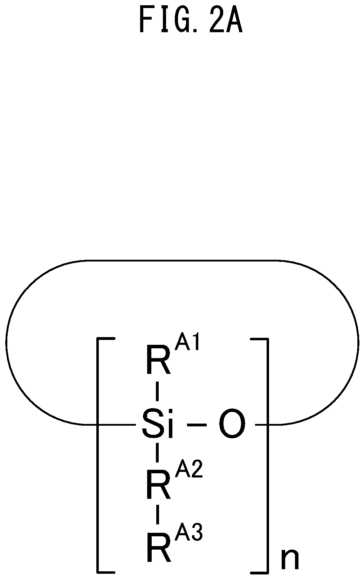

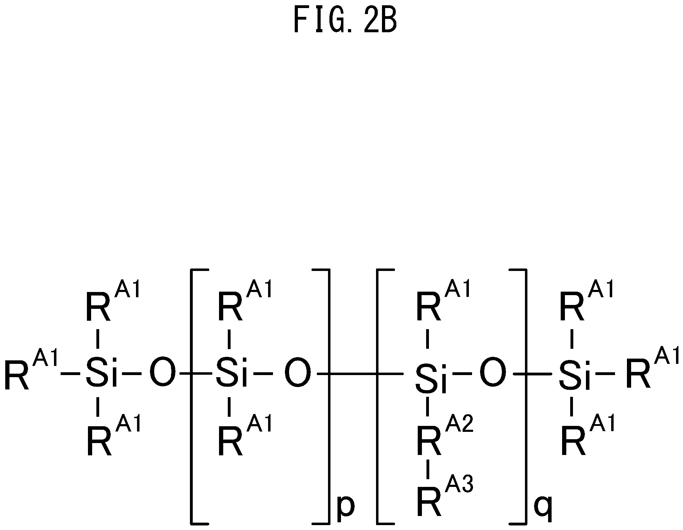

FIGS. 2A and 2B illustrate the general formulae of the cyclic siloxane and the linear siloxane according to the present embodiment, respectively. In FIGS. 2A and 2B, R^{A3} represents an epoxy-containing group that contains an epoxy group. It is noted here that the concept of the term "epoxy-containing group" used herein encompasses an epoxy group itself. R^{A2} represents a chain hydrocarbon group, and constitutes a side chain of the respective siloxane together with R^{A3}. In other words, the epoxy group is arranged on a side chain of the cyclic siloxane or the linear siloxane. R^{A1} represents a hydrocarbon group different from R^{A2}, specifically an alkyl group having not more than 10 carbon atoms.

The cyclic siloxane illustrated in FIG. 2A may be an oligomer of less than a decamer, or a polymer of a decamer or more. The cyclic siloxane is preferably a tetramer or more. In other words, n is preferably a natural number of 4 or larger. It is noted here, however, that the cyclic siloxane may be a trimer. The linear siloxane illustrated in FIG. 2B is preferably a polymer. A molar ratio q/p of the monomer units constituting the polymer is, for example, 0.1 to 10.

The siloxanes illustrated in FIGS. 2A and 2B can each be obtained by reacting a cyclic or linear precursor siloxane having no epoxy group with a compound having an epoxy group, and thereby introducing plural side chains having an epoxy group to the precursor siloxane.

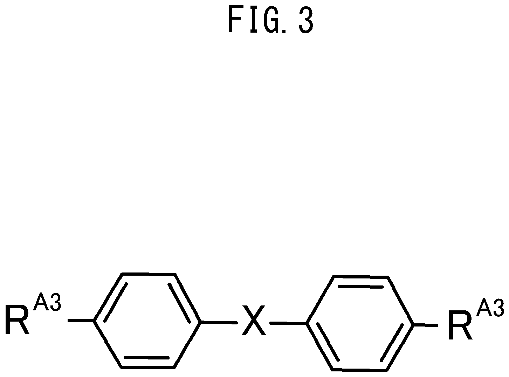

FIG. 3 illustrates the general formula of a bisphenol-type epoxy that can be used in combination with the above-described siloxanes. The term "bisphenol" used herein refers to a compound having a structure in which a pair of phenyl groups are connected via an arbitrary divalent linking group X. Examples of the linking group X include an isopropylidene group, a methylene group, and a sulfonyl group.

The bisphenol-type epoxy according to the present embodiment has a structure in which the above-described epoxy-containing group R^{A3} is introduced to each of the pair of phenyl groups constituting a bisphenol. As the first component, the bisphenol-type epoxy illustrated in FIG. 3 may be used in combination with the siloxane illustrated in FIG. 2A or 2B.

Description is continued referring back to FIG. 1. On another front, a second component containing a ring-opening functional group (excluding a hydroxy group) that is a functional group having an action of ring-opening the epoxy group of the above-described first component is prepared as well (second component preparation step S2).

The term "ring-opening functional group (excluding a hydroxy group)" used herein means that the ring-opening functional group may be partially constituted by a hydroxy group, but the hydroxy group itself is excluded from the concept of ring-opening functional group. The ring-opening functional group has an action of ring-opening not only the epoxy groups of the siloxanes illustrated in FIGS. 2A and 2B, but also the epoxy group of the bisphenol-type epoxy illustrated in FIG. 3.

Specifically, the second component preferably contains at least one of a phenol having a structure in which the above-described ring-opening functional group is bound to a benzene ring, or an acyclic aliphatic compound having a structure in which the above-described ring-opening functional group is bound to at least one end. This is concretely described below.

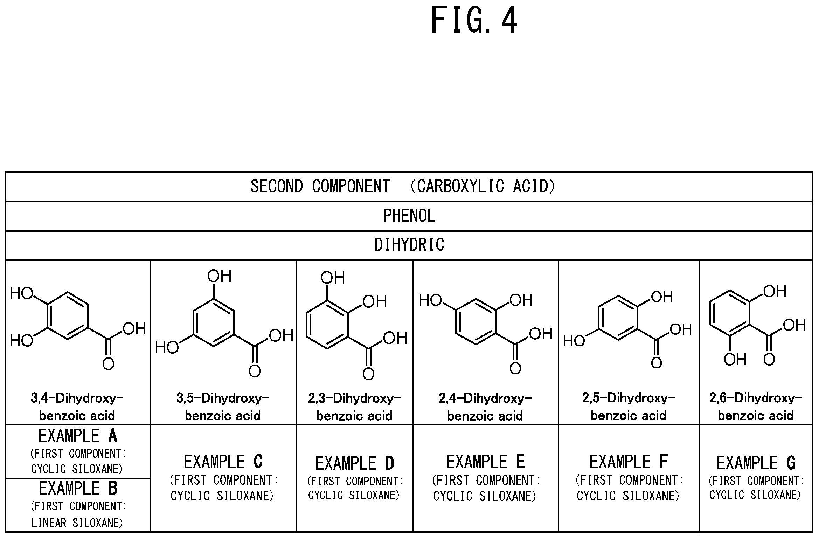

FIGS. 4 to 6 illustrate examples of a phenol that can be used as the second component. The phenol used as the second component may be a monohydric phenol, or a di- or higher-valent polyhydric phenol. The phenol, however, is preferably a polyhydric phenol.

The ring-opening functional group is not particularly limited as long as it has an action of ring-opening an epoxy group. Examples of the ring-opening functional group include a carboxy group, an amino group, a mercapto group, and carboxylic acid anhydrides. The phenol used as the second component may contain only one or a plurality of such ring-opening functional groups. It is noted here that FIGS. 4 to 6 illustrate, as specific examples, phenols having only one carboxy group as the ring-opening functional group.

Further, in the phenol used as the second component, in order to allow the action of the ring-opening functional group to be fully exerted, it is preferred that a phenolic hydroxy group be bound to at least one of carbon atoms at the 3-position, the 4-position, and the 5-position, based on the position of a carbon atom to which the ring-opening functional group is bound in a benzene ring. It is more preferred that only hydrogen atoms be bound to carbon atoms at the 2-position and the 6-position of the benzene ring.

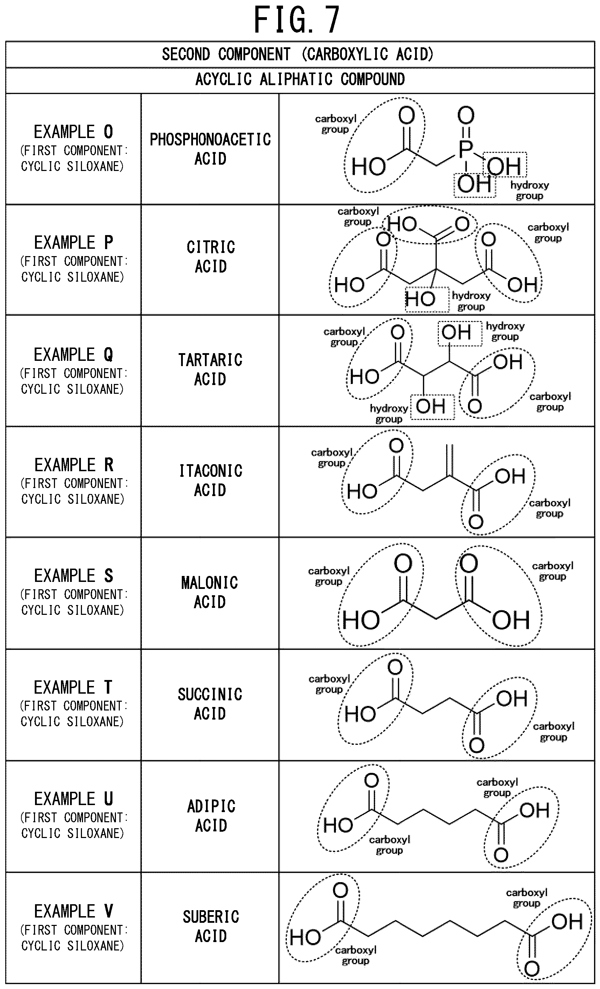

FIG. 7 illustrates examples of an acyclic aliphatic compound that can be used as the second component. As the acyclic aliphatic compound, one having a structure in which a carboxy group serving as the above-described ring-opening functional group is bound to at least one end of a main chain, specifically phosphonoacetic acid, citric acid, tartaric acid, itaconic acid, malonic acid, succinic acid, adipic acid, or suberic acid, can be used. The acyclic aliphatic compound preferably further contains a hydroxy group on the other end of the main chain, or in a side chain.

Description is continued referring back to FIG. 1. Next, the first component and the second component are mixed (mixing step S3). For this mixing, any known mixing means, for example, a mixer such as a homogenizer or a dissolver, a kneader, a roll, a bead mill, or a planetary stirrer, can be used. After the mixing, the resultant may be degassed under vacuum. As a result of the mixing, the heat-curable composition according to the present embodiment is obtained.

An amount of the second component to be added with respect to the first component is not particularly limited; however, a molar ratio of the second component with respect to epoxy groups contained in the first component (hereinafter, referred to as "molar ratio to epoxy groups") is preferably higher than 0 but 1 or lower. This molar ratio to epoxy groups may be higher than 0 but 0.75 or lower, higher than 0 but 2/3 (≈ 0.66) or lower, higher than 0 but 0.5 or lower, higher than 0 but 1/3 (≈ 0.33) or lower, or higher than 0 but 0.25 or lower.

In the mixing of the first component and the second component, when a charged molar ratio represented by (number of moles of first component: number of moles of second component) is A: B and the first component has M epoxy groups per 1 mol, the molar ratio to epoxy groups is represented by B/(A·M). The denominator A·M represents a ratio of a total number of epoxy groups contained in the first component.

Particularly, when the first component consists of a siloxane and a bisphenol-type epoxy, the molar ratio to epoxy groups is represented by B/(A1·M1 + A2·M2), wherein A1 represents a molar ratio of the siloxane with respect to the second component, A2 represents a molar ratio of the bisphenol-type epoxy with respect to the second component, M1 represents the number of epoxy groups per 1 mol of the siloxane, and M2 represents the number of epoxy groups per 1 mol of the bisphenol-type epoxy.

In the mixing step S3, only the first component and the second component may be mixed, or the first component and the second component may be mixed together with an additive within a range that does not impair the heat-curing action. Further, a filler may be blended into the resulting heat-curable composition.

The additive may be, for example, a mixing solvent used for facilitating the mixing of the first component and the second component. The mixing solvent may be almost entirely removed after the mixing, or may be allowed to remain partially or entirely for the purpose of adjusting the viscosity of the resulting heat-curable composition. Examples of the mixing solvent include aprotic polar solvents, such as N,N-dimethylformamide, N,N-dimethylacetamide, and dimethylsulfoxide.

As the additive, in addition to the mixing solvent, commonly used additives such as an antifoaming agent, a leveling agent, a surfactant, a flame retardant, a colorant, an antioxidant, a UV absorber, an ion adsorbent, a pigment, a dispersant, a light diffusing agent, a phosphor, and a mold release agent may be incorporated as well.

However, the main components of the heat-curable composition according to the present embodiment are preferably the first component and the second component. Specifically, it is preferred that the first component and the second component constitute not less than 70% by mass, preferably not less than 80% by mass, more preferably not less than 90% by mass, still more preferably not less than 95% by mass, of the heat-curable composition according to the present embodiment.

The heat-curable composition according to the present embodiment is a material that can be used in various applications. According to the present embodiment, a cured article obtained by curing the heat-curable composition is also provided. As a method of heating performed for curing the heat-curable composition, any known method, such as hot-air circulation heating, far-infrared heating, or high-frequency heating, may be employed.

The heat-curable composition according to the present embodiment can be used as, for example, an adhesive agent. In the adhesive agent according to the present embodiment, the above-described first component, second component, and additives exist in the form of a mixture thereof. It is noted here, however, that the above-described first component, second component, and additives may exist in a state of being separated from each other, and may be mixed at the time of using the heat-curable composition as an adhesive agent.

As described above, according to the present embodiment, a novel heat-curable composition and a production method thereof, a cured article, and an adhesive agent are provided.

According to the heat-curable composition of the present embodiment, in a heating process, the ring-opening functional group of the second component ring-opens the epoxy groups of the first component, whereby the first component and the second component are bound to each other. Further, in this heating process, radicals are generated on the aromatic ring, the main chain, and the like of the second component in the resulting bound compound, causing a coupling reaction to proceed. The progress of these reactions in a sequential manner leads to an increase in the molecular weight of the compound consisting of the first component and the second component, and formation of cross-linked structures that are three-dimensionally connected. Therefore, when the heat-curable composition is used as an adhesive agent, a sufficient adhesive strength is obtained. Specifically, a sufficient shear strength is obtained between adhered surfaces.

Further, during a heat-curing process and after heat-curing, the flexibility of the siloxane itself derived from the first component contributes to alleviation of stress caused by thermal strain and improvement in impact resistance. Therefore, an adhesive agent containing the heat-curable composition according to the present embodiment is suitable for not only adhering materials of the same kind but also adhering materials of different kinds that are different in thermal expansion coefficient, and the adhesive agent exhibits excellent impact resistance after being cured.

As a specific example, the adhesive agent according to the present embodiment can be used for adhesion of members constituting an automobile. A cured product of the adhesive agent according to the present embodiment has excellent shear strength and impact resistance; therefore, it is capable of stably maintaining a durable adhesion structure even when vibration during the travel of the automobile or an impact load caused by a collision is applied thereto.

Moreover, the adhesive agent according to the present embodiment can be used for adhesion of materials of different kinds. This enables to realize a multi-material structure in which materials of different kinds are appropriately arranged in the right places. Particularly, the adhesive agent according to the present embodiment can be used for joining a metal and an engineering plastic. The resulting multi-material structure in which the metal and the engineering plastic are joined contributes to weight reduction of transport vehicles, such as automobiles and airplanes.

### Examples

Hereinafter, Examples A to M are described as specific examples of the production method illustrated in FIG. 1.

In Examples A to M, a siloxane was used as the first component, and the phenols illustrated in FIGS. 4 to 6 were each used as the second component. Examples A to M are concretely described below.

### [Example A]

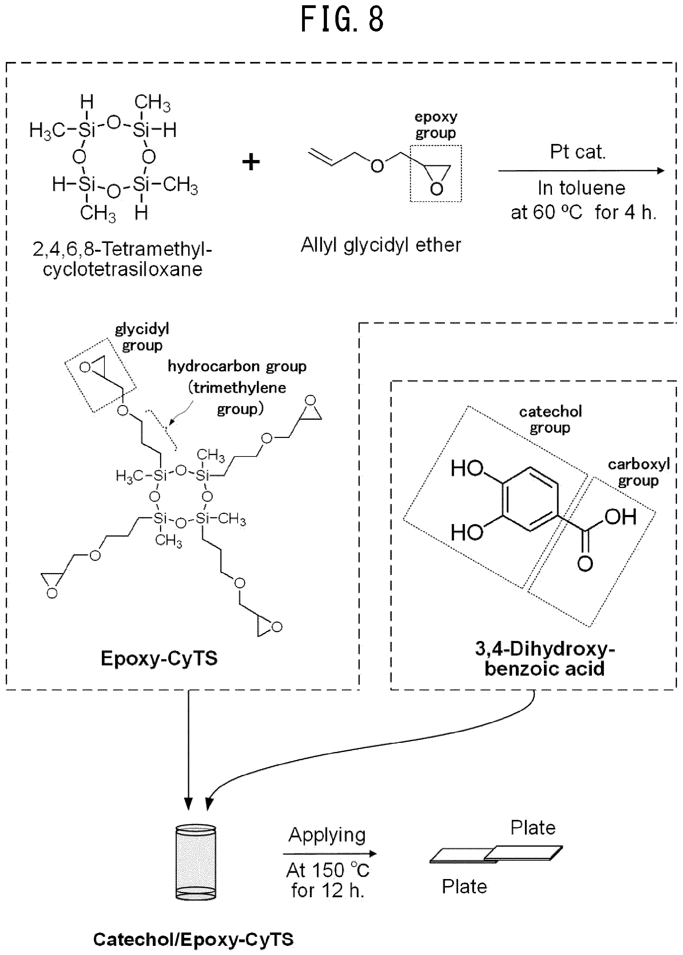

The method of producing heat-curable compositions according to Example A is described below with reference to FIG. 8.

First, the synthesis of the first component is described. A raw material solution was obtained by dissolving each of 2,4,6,8-tetramethylcyclotetrasiloxane (MW = 240.51 g/mol; 4.0 mmol = 0.9620 g) as a cyclic precursor siloxane and allyl glycidyl ether [(MW = 114.14 g/mol, purity: 99%); 24.0 mmol = 2.7670 g] that is a compound having an epoxy group in 20 mL of toluene, and mixing the resulting solutions.

Subsequently, a catalyst solution, in which a platinum catalyst [(platinum-divinyltetramethyldisiloxane complex/toluene solution, 0.5% by weight); 3% by weight = 0.1153 g] in an amount of 3 parts by weight with respect to a total weight of 97 parts by weight of 2,4,6,8-tetramethylcyclotetrasiloxane and allyl glycidyl ether was dissolved in 20 mL of toluene, was added to the above-obtained raw material solution, followed by 4-hour stirring at 60°C.

Then, to the thus obtained mixed solution of the catalyst solution and the raw material solution, an activated carbon (0.5586 g) was added in an amount of 1 part by weight with respect to 100 parts by weight of the mixed solution, and the resultant was stirred for another one hour. Thereafter, the activated carbon was removed from the mixed solution by suction filtration, and toluene and excess allyl glycidyl ether were removed from the mixed solution at 80°C using an evaporator.

In this manner, a cyclic siloxane tetramer (hereinafter, denoted as "Epoxy-CyTS") was obtained as the first component according to Example A. It is noted here that the yield was calculated to be 102% and 2.8479 g, using a FW value of 697.07 g/mol.

As illustrated in FIG. 8, Epoxy-CyTS according to Example A is a tetramer having a total of four side chains that are each bound to a silicon atom constituting a siloxane bond. The side chains each have a glycidyl group containing an epoxy group. This glycidyl group is the glycidyl group constituting allyl glycidyl ether that was introduced to each side chain by a hydrosilylation reaction. Further, the side chains each have a chain hydrocarbon group, specifically a trimethylene group, between the oxygen atom adjacent to the glycidyl group and the silicon atom constituting the siloxane bond.

The glycidyl group illustrated in FIG. 8 is one example of the epoxy-containing group R^{A3} illustrated in FIG. 2A. Further, the trimethylene group illustrated in FIG. 8 is one example of the hydrocarbon group R^{A2} illustrated in FIG. 2A. Moreover, the methyl group illustrated in FIG. 8 is one example of the hydrocarbon group R^{A1} illustrated in FIG. 2A.

On another front, 3,4-dihydroxybenzoic acid (154.12 g/mol, 98.0%) was prepared as a phenol constituting the second component according to Example A. As illustrated in FIG. 8, 3,4-dihydroxybenzoic acid is a dihydric phenol having a structure in which a carboxy group is bound to a benzene ring. The carboxy group is one example of a ring-opening functional group that has an action of ring-opening an epoxy group of the first component.

Further, Epoxy-CyTS serving as the first component and 3,4-dihydroxybenzoic acid serving as the second component were mixed to obtain a heat-curable composition (hereinafter, also denoted as "Catechol/Epoxy-CyTS").

In this process, plural kinds of Catechol/Epoxy-CyTS were obtained by changing the charged ratio of the first component and the second component. In addition, at each charged ratio, two kinds of Catechol/Epoxy-CyTS were obtained with or without an addition of a mixing solvent at the time of the mixing.

Table 1 shows the production conditions of Catechol/Epoxy-CyTS. In

Table 1, the added amount of the second component with respect to the amount of the first component is shown as a molar ratio to epoxy groups, which is a molar ratio with respect to the epoxy groups contained in Epoxy-CyTS constituting the first component.

It is noted here that the numerical value "1" in the column of "First component" indicates that, in the calculation of the molar ratio to epoxy groups, a ratio of a total number of the epoxy groups contained in the first component was used as a reference value.

**TABLE 1**

| | Molar ratio with respect to epoxy groups | | Presence or absence of mixing solvent |
|---|---|---|---|
| | First component (Epoxy-CyTS) | Second component (3, 4-dihydroxybenzoic acid) | |
| Example A1 | 1 | 0.25 | present |
| Example A2 | 1 | 0.5 | present |
| Example A3 | 1 | 0.75 | present |
| Example A4 | 1 | 1 | present |
| Example A5 | 1 | 0.25 | absent |
| Example A6 | 1 | 0.5 | absent |
| Example A7 | 1 | 0.75 | absent |
| Example A8 | 1 | 1 | absent |

Catechol/Epoxy-CyTS according to Example A1 was obtained by adding 0.2 mL of *N,N*-dimethylformamide (DMF) used as a mixing solvent to Epoxy-CyTS (0.2 mmol, 0.1394 g) (697.07 g/mol) and 3,4-dihydroxybenzoic acid (0.2 mmol, 0.0315 g) (154.12 g/mol, 98.0%), mixing the resultant, and then removing most of DMF at 80°C using an evaporator.

Catechol/Epoxy-CyTS according to Example A2 was obtained by adding 0.2 mL of DMF to Epoxy-CyTS (0.2 mmol, 0.1394 g) (697.07 g/mol) and 3,4-dihydroxybenzoic acid (0.4 mmol, 0.0629 g) (154.12 g/mol, 98.0%), mixing the resultant, and then removing most of DMF at 80°C using an evaporator.

Catechol/Epoxy-CyTS according to Example A3 was obtained by adding 0.2 mL of DMF to Epoxy-CyTS (0.2 mmol, 0.1394 g) (697.07 g/mol) and 3,4-dihydroxybenzoic acid (0.6 mmol, 0.0944 g) (154.12 g/mol, 98.0%), mixing the resultant, and then removing most of DMF at 80°C using an evaporator.

Catechol/Epoxy-CyTS according to Example A4 was obtained by adding 0.2 mL of DMF to Epoxy-CyTS (0.2 mmol, 0.1394 g) (697.07 g/mol) and 3,4-dihydroxybenzoic acid (0.8 mmol, 0.1258 g) (154.12 g/mol, 98.0%), mixing the resultant, and then removing most of DMF at 80°C using an evaporator.

Catechol/Epoxy-CyTS according to Example A5 was obtained by mixing Epoxy-CyTS (0.2 mmol, 0.1394 g) (697.07 g/mol) and 3,4-dihydroxybenzoic acid (0.2 mmol, 0.0315 g) (154.12 g/mol, 98.0%), and subsequently stirring the resultant at room temperature over a period of two days.

Catechol/Epoxy-CyTS according to Example A6 was obtained by mixing Epoxy-CyTS (0.2 mmol, 0.1394 g) (697.07 g/mol) and 3,4-dihydroxybenzoic acid (0.4 mmol, 0.0629 g) (154.12 g/mol, 98.0%), and subsequently stirring the resultant at room temperature over a period of two days.

Catechol/Epoxy-CyTS according to Example A7 was obtained by mixing Epoxy-CyTS (0.2 mmol, 0.1394 g) (697.07 g/mol) and 3,4-dihydroxybenzoic acid (0.6 mmol, 0.0944 g) (154.12 g/mol, 98.0%), and subsequently stirring the resultant at room temperature over a period of two days.

Catechol/Epoxy-CyTS according to Example A8 was obtained by mixing Epoxy-CyTS (0.2 mmol, 0.1394 g) (697.07 g/mol) and 3,4-dihydroxybenzoic acid (0.8 mmol, 0.1258 g) (154.12 g/mol, 98.0%), and subsequently stirring the resultant at room temperature over a period of two days.

Catechol/Epoxy-CyTS according to Examples A1 to A4, in which the mixed solvent was used, were in the form of a soft paste. On the other hand, Catechol/Epoxy-CyTS according to Examples A5 to A8, in which the mixed solvent was not used, were in the form of a cloudy liquid.

### [Evaluation of Adhesiveness of Example A]

Evaluation results obtained with the use of each Catechol/Epoxy-CyTS according to Examples A1 to A8 as a heat-curable adhesive agent are described below.

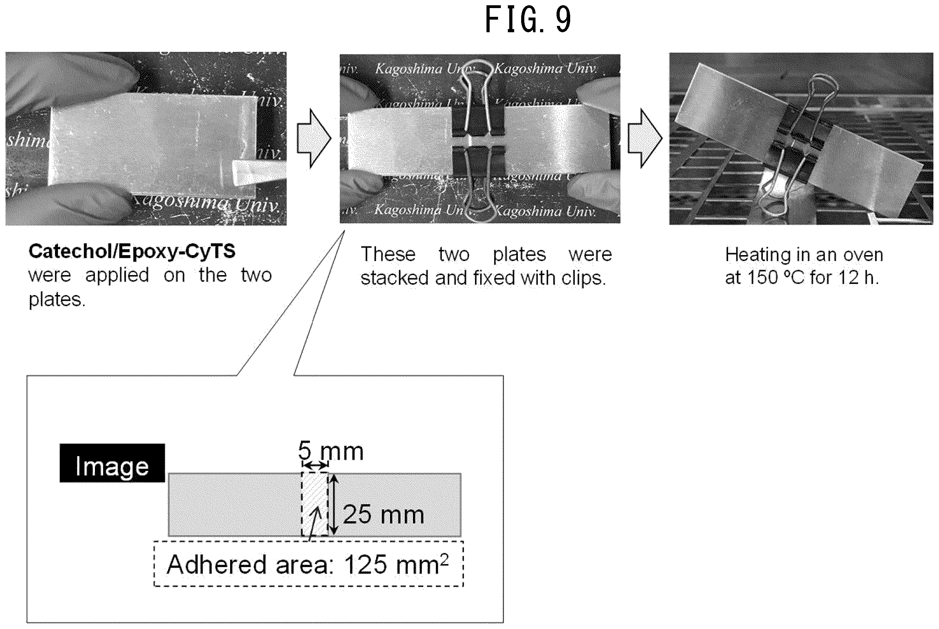

The procedure of preparing an evaluation sample is described with reference to FIG. 9. Each Catechol/Epoxy-CyTS according to Examples A1 to A8 was applied to a pair of substrates. Subsequently, the regions of the pair of substrates to which Catechol/Epoxy-CyTS was applied (the regions are hereinafter referred to as "adhesion surfaces") were stacked together and fixed with clips, and then heated in this state at 150°C for 12 hours. It is noted here that the adhesion surfaces had an area of 125 mm².

Evaluation samples according to Examples A1 to A8 were obtained in the above-described manner. Further, for comparison, an evaluation sample according to Comparative Example A was obtained in the same manner, using only Epoxy-CyTS of the first component as an adhesive agent without the second component. For each of the thus obtained evaluation samples, the shear stress was measured by conducting a tensile shear test in which the pair of substrates were pulled from each other in a direction parallel to the adhesion surfaces at room temperature.

Table 2 shows the shear strength that is the maximum shear stress measured for each of the evaluation samples.

**TABLE 2**

| | Shear strength (125mm²) | | | | |
|---|---|---|---|---|---|
| | Al-Al | PBT-PBT | PPS-PPS | Al-SUS | Al-PPS |
| Example A1 | ≥8.16 MPa | 7.07 MPa | 4.28 MPa | ≥8.16 MPa | 4.98 MPa |
| Example A2 | ≥8.16 MPa | 6.07 MPa | 5.49 MPa | ≥8.16 MPa | 7.05 MPa |
| Example A3 | ≥8.16 MPa | 2.66 MPa | 3.30 MPa | ≥8.16 MPa | 6.40 MPa |
| Example A4 | ≥8.16 MPa | 3.12 MPa | 4.05 MPa | ≥8.16 MPa | 5.17 MPa |
| Example A5 | ≥8.16 MPa | 6.99 MPa | ≥8.16 MPa | ≥8.16 MPa | ≥8.16 MPa |
| Example A6 | ≥8.16 MPa | 7.73 MPa | ≥8.16 MPa | ≥8.16 MPa | ≥8.16 MPa |
| Example A7 | ≥8.16 MPa | 8.09 MPa | 4.24 MPa | ≥8.16 MPa | ≥8.16 MPa |
| Example A8 | ≥8.16 MPa | 7.14 MPa | 8.12 MPa | ≥8.16 MPa | ≥8.16 MPa |
| Comparative Example A | × | × | × | - | - |

In Table 2, "Al-Al" means that the pair of substrates were both made of aluminum; "PBT-PBT" means that the pair of substrates were both made of a polybutylene terephthalate that is an engineering plastic; "PPS-PPS" means that the pair of substrates were both made of a polyphenylene sulfide that is an engineering plastic; "Al-SUS" means that one of the pair of substrates was made of aluminum and the other was made of stainless steel; and "Al-PPS" means that one of the pair of substrates was made of aluminum and the other was made of a polyphenylene sulfide.

Further, in Table 2, "≥8.16 MPa" means that the adhesion surfaces of the evaluation sample were not detached even when they were pulled from each other with a strength of up to 8.16 MPa (1,020 N for an area of 125 mm² of the respective adhesion surfaces), which is the maximum stress measurable by the tensile shear tester used; "×" means that the tensile shear test could not be performed since the pair of substrates were easily detached; and "-" means that the measurement was not performed.

As shown in Table 2, sufficient adhesiveness was not obtained in Comparative Example A in which only the first component was used as an adhesive agent. On the other hand, in Examples A1 to A8 in which a mixture of the first component and the second component was used as an adhesive agent, a sufficient adhesive strength was obtained not only for the materials of the same kind, such as Al-Al, PBT-PBT, and PPS-PPS, but also for the materials of different kinds, such as Al-SUS and Al-PPS. It is noted here that a particularly excellent adhesive strength was obtained in Examples A5 to A8 in which no mixing solvent was used.

Further, in order to check the shear stress occurring when substrates of the same material, typically Al-Al, are detached from each other, evaluation samples in which the area of the adhesion surfaces was reduced to 25 mm² were prepared for Examples A5 to A8, and the tensile shear test was conducted again.

Table 3 shows the shear strength that is the maximum shear stress measured for each of the evaluation samples according to Examples A5 to A8. In Table 3, the area of the adhesion surfaces is shown in parentheses ( ).

**TABLE 3**

| | Shear strength |
|---|---|
| | Al-Al (25mm²) |
| Example A5 | 25.2 MPa |
| Example A6 | 26.12 MPa |
| Example A7 | 30.61 MPa |
| Example A8 | 26.61 MPa |

In Catechol/Epoxy-CyTS according to Examples A1 to A8, during a heating process, the carboxy group serving as a ring-opening functional group in the second component ring-opens the epoxy groups of the first component, whereby the first component and the second component are bound to each other. Further, in this heating process, radicals are generated on the aromatic ring of the second component in the resulting bound compound, causing a coupling reaction to proceed. The progress of these reactions in a sequential manner leads to an increase in the molecular weight of the compound consisting of the first component and the second component, and formation of cross-linked structures that are three-dimensionally connected. As a result, a sufficient adhesive strength is obtained.

On the other hand, in Comparative Example A, the second component is not used, and the action of ring-opening the epoxy groups in the first component is not sufficiently obtained; therefore, curing of the heat-curable composition does not sufficiently proceed even with heating.

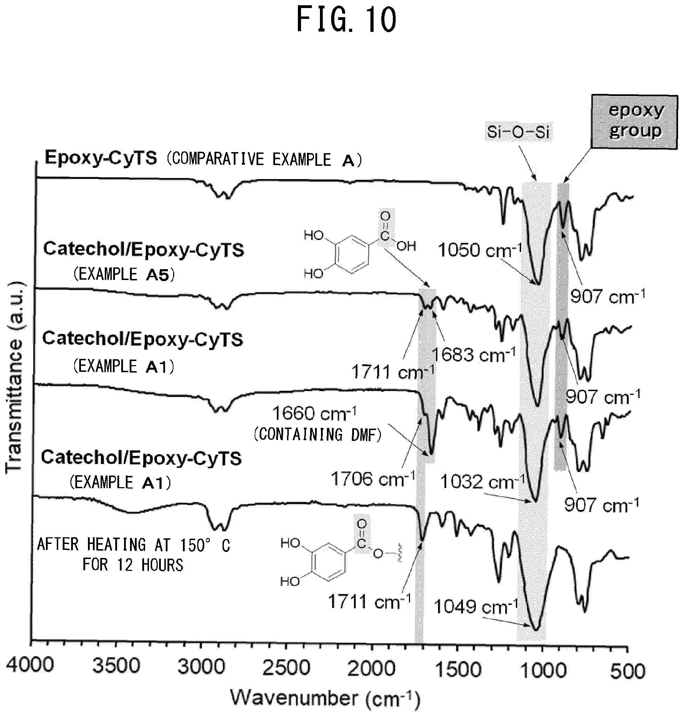

Measurement results for verifying the action of the carboxy group to ring-open the epoxy groups are described below with reference to FIG. 10.

FIG. 10 shows FT-IR spectra of Epoxy-CyTS before heating, Catechol/Epoxy-CyTS according to Example A5 before heating, Catechol/Epoxy-CyTS according to Example A1 before heating, and Catechol/Epoxy-CyTS according to Example A1 after heating.

In the FT-IR spectra of Epoxy-CyTS before heating, Catechol/Epoxy-CyTS according to Example A5 before heating, and Catechol/Epoxy-CyTS according to Example A1 before heating, an absorption peak derived from an epoxy group is observed. On the other hand, this absorption peak disappears in the FT-IR spectrum of Catechol/Epoxy-CyTS according to Example A1 after heating. These results support the occurrence of ring-opening of an epoxy group due to the heating.

Further, in the FT-IR spectra of Epoxy-CyTS before heating, Catechol/Epoxy-CyTS according to Example A5 before heating, and Catechol/Epoxy-CyTS according to Example A1 before heating, an absorption peak derived from the carbonyl group of 3,4-dihydroxybenzoic acid is observed. On the other hand, this absorption peak disappears in the FT-IR spectrum of Catechol/Epoxy-CyTS according to Example A1 after heating. Further, a distinct absorption peak derived from an ester bond structure is observed in the FT-IR spectrum of Catechol/Epoxy-CyTS according to Example A1 after heating. These results support that an ester bond was formed as a result of ring-opening of an epoxy group by the carboxy group of 3,4-dihydroxybenzoic acid.

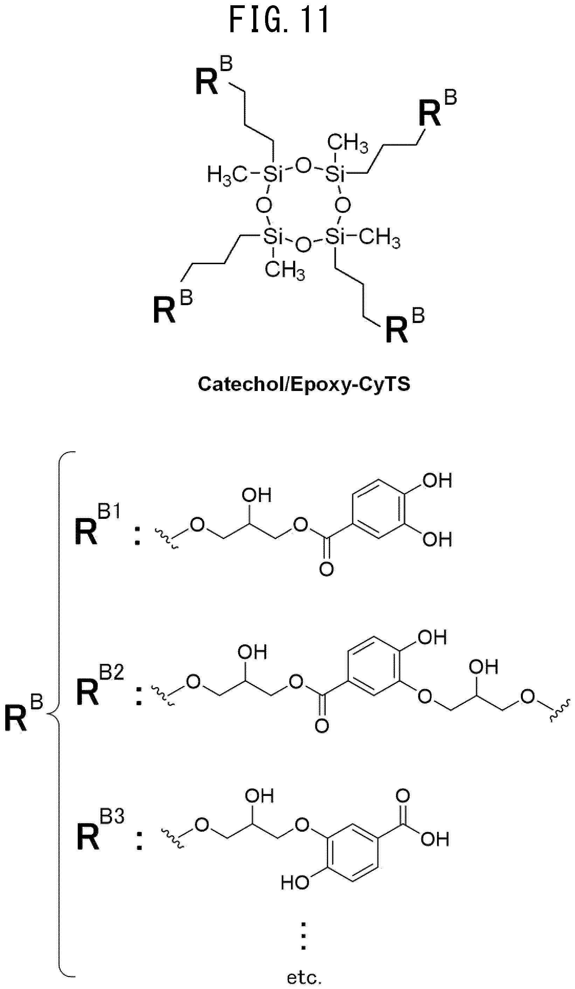

FIG. 11 specifically illustrates the main part of expected molecular structure of Catechol/Epoxy-CyTS according to Examples A1 to A8 after heating. In FIG. 11, a substituted moiety in the molecular structure of Epoxy-CyTS used as the first component illustrated in FIG. 8 is denoted as a substituent R^{B}. Examples of the substituent R^{B} include substituents R^{B1}, R^{B2}, and R^{B3}.

The substituent R^{B1} has an ester bond structure. The ester bond structure is formed by a ring-opening reaction in which the carboxy group of 3,4-dihydroxybenzoic acid illustrated in FIG. 8 ring-opens an epoxy group of Epoxy-CyTS. A catechol group derived from 3,4-dihydroxybenzoic acid is bound to a side chain via the ester bond structure.

The substituent R^{B2} represents a linking group that connects a ring-opened epoxy group in a side chain of one Epoxy-CyTS and a ring-opened epoxy group in a side chain of another Epoxy-CyTS via an ester bond structure derived from the carboxy group of 3,4-dihydroxybenzoic acid. In this manner, a network structure in which molecules of the siloxane used as the first component are bound to each other in a net-like manner is formed. This is believed to occur in conjunction with the formation of a network structure by the above-described coupling reaction of radicals generated on the aromatic ring of the second component.

The substituent R^{B3} is generated as a result of binding of 3,4-dihydroxybenzoic acid to the end of a side chain of Epoxy-CyTS through ring-opening of an epoxy group of Epoxy-CyTS by a phenolic hydroxy group of 3,4-dihydroxybenzoic acid.

It is noted here that, although FIG. 11 exemplifies a structure in which four side chains of a tetramer all have a substituent R^{B}, curing also proceeds when any of the above-described substituents R^{B1} to R^{B3} and the like is formed in at least some of the side chains. In some of the side chains, the glycidyl group illustrated in FIG. 8 may remain as is.

### [Evaluation of Heat Resistance of Example A]

Next, the results of conducting a heat resistance test for the same evaluation samples as those used in the above-described evaluation of adhesiveness are described.

The evaluation samples were heated in an oven with a 5-kg weight being suspended from each evaluation sample. The heating temperature was gradually increased. During the heating, the load of the weight acted as a shear force on the adhesion surfaces of the pair of substrates.

Table 4 shows the temperature at which an adhered state of the pair of substrates was confirmed to be maintained.

**TABLE 4**

| | Temperature at which adhered state was confirmed to be maintained | |
|---|---|---|
| | Al-Al | Al-SUS |
| Example A1 | 250°C | 150°C |
| Example A2 | 200°C | 150°C |
| Example A3 | 200°C | 150°C |
| Example A4 | 120°C | 120°C |
| Example A5 | 250°C | 150°C |
| Example A6 | 250°C | 150°C |
| Example A7 | 150°C | 150°C |
| Example A8 | 150°C | 150°C |

As shown in Table 4, all of Examples A1 to A8 exhibited a sufficient heat resistance. It was confirmed that the adhesiveness was maintained even when the temperature of each evaluation sample was lowered to room temperature.

The reason why a sufficient heat resistance was obtained in Examples A1 to A8 is believed to be because a network structure was formed by the progress of crosslinking reaction based on the above-described ring-opening reaction of epoxy groups and radical coupling reaction of aromatic ring, and softening was thus moderately inhibited even at high temperatures. Meanwhile, it is believed that the flexibility of the siloxane derived from the first component was useful particularly in alleviating the stress caused by thermal strain between materials of different kinds.

### [Evaluation of Impact Resistance of Example A]

Next, the results of conducting an impact resistance test for the same evaluation samples as those used in the above-described evaluation of adhesiveness are described.

The impact resistance test was conducted by hitting representative evaluation samples of Examples A2, A3, A5, and A6, in which the pair of substrates were made of aluminum, with a hammer from a direction perpendicular to the adhesion surfaces.

As a result, in all of the evaluation samples of Examples A2, A3, A5, and A6, the adhered surfaces were not detached even when hit with the hammer, and deformation of the aluminum plates was observed. In other words, sufficient impact resistance was confirmed. It is believed that the flexibility of the siloxane derived from the first component was useful in alleviating the impact.

### [Example B]

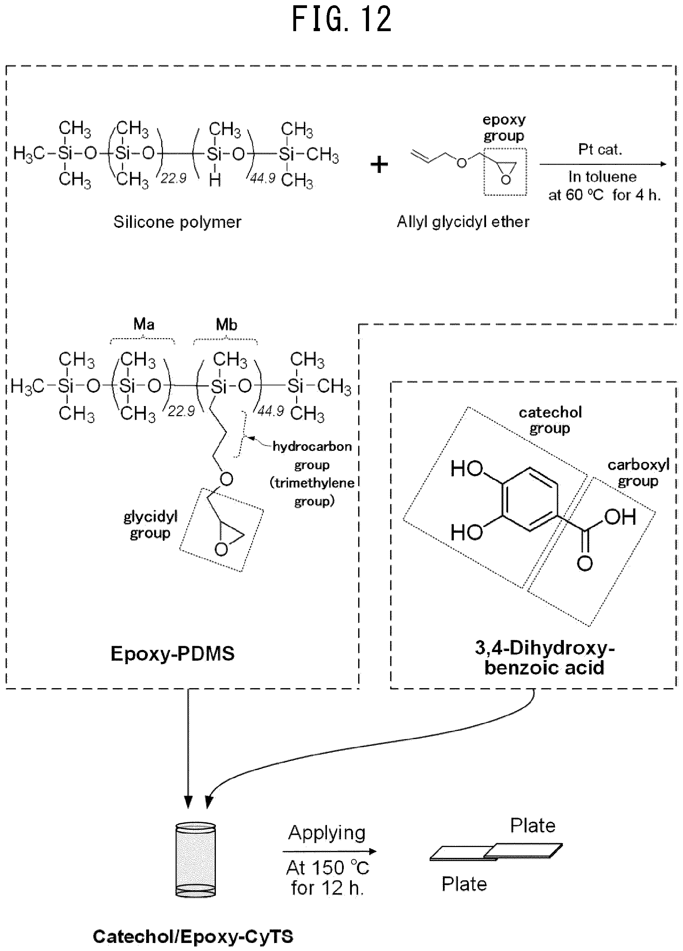

The method of producing heat-curable compositions according to Example B is described below with reference to FIG. 12. In the above-described Example A, a cyclic siloxane was used as the first component; however, in Example B, a linear siloxane was used as the first component. This is described below concretely.

First, the synthesis of the first component is described. A silicone polymer (MW = 4,560.19 g/mol; 0.1 mmol = 0.4560 g) serving as a linear precursor siloxane was dissolved in 2 mL of toluene, and allyl glycidyl ether [(MW = 114.14 g/mol, purity:99%); 6.735 mmol = 0.7765 g] dissolved in 5 mL of toluene was subsequently added to the resultant, followed by mixing.

A platinum catalyst [(platinum-divinyltetramethyldisiloxane complex/toluene solution, 0.5% by weight); 3% by weight = 0.0381 g] in an amount of 3 parts by weight with respect to a total weight of 97 parts by weight of the silicone polymer and allyl glycidyl ether was dissolved in 5 mL of toluene, and the resultant was added to the above-obtained mixed solution, followed by 4-hour stirring at 60°C.

Thereafter, an activated carbon (0.1167 g) was added in an amount of 1 part by weight with respect to 100 parts by weight of the mixed solution, and the resultant was stirred for another one hour. The activated carbon was removed by suction filtration, and toluene and excess allyl glycidyl ether were removed at 80°C using an evaporator.

In this manner, a linear polysiloxane (hereinafter, denoted as "Epoxy-PDMS") was obtained as the first component according to Example B. It is noted here that the yield was calculated to be 102% and 0.9913 g, using a FW value of 9,685.076 g/mol.

As illustrated in FIG. 12, Epoxy-PDMS according to Example B is a copolymer of a first monomer unit Ma and a second monomer unit Mb. A molar ratio of the first monomer unit and the second monomer unit, Ma:Mb, is 22.9:44.9. The first monomer unit Ma and the second monomer unit Mb are both D units in which two substituents are bound to a silicon atom.

The two substituents of the first monomer unit Ma are both hydrocarbon groups. Specifically, the first monomer unit Ma is a dimethylsiloxane unit. One of the substituents in the second monomer unit Mb is also a hydrocarbon group, specifically a methyl group.

The other substituent in the second monomer unit Mb constitutes a side chain. This side chain has a glycidyl group containing an epoxy group. The glycidyl group is derived from allyl glycidyl ether. Further, the side chain has a chain hydrocarbon group, specifically a trimethylene group, between an oxygen atom adjacent to the glycidyl group and a silicon atom constituting a siloxane bond.

The glycidyl group illustrated in FIG. 12 is one example of the epoxy-containing group R^{A3} illustrated in FIG. 2B. Further, the trimethylene group illustrated in FIG. 12 is one example of the hydrocarbon group R^{A2} illustrated in FIG. 2B. Moreover, the methyl group illustrated in FIG. 12 is one example of the hydrocarbon group R^{A1} illustrated in FIG. 2B.

On another front, the same 3,4-dihydroxybenzoic acid (154.12 g/mol, 98.0%) as the one used in Example A was prepared as the second component according to Example B. Subsequently, Epoxy-PDMS serving as the first component and 3,4-dihydroxybenzoic acid serving as the second component were mixed to obtain a heat-curable composition (hereinafter, also denoted as "Catechol/Epoxy-PDMS").

Table 5 shows the production conditions of Catechol/Epoxy-PDMS. In Table 5, the added amount of the second component with respect to the amount of the first component is shown as a molar ratio to epoxy groups, which is a molar ratio with respect to the epoxy groups contained in Epoxy-PDMS constituting the first component. It is noted here that the numerical value "1" in the column of "First component" indicates that, in the calculation of the molar ratio to epoxy groups, a ratio of a total number of the epoxy groups contained in the first component was used as a reference value.

**TABLE 5**

| | Molar ratio with respect to epoxy groups | | Presence or absence of mixing solvent |
|---|---|---|---|
| | First component (Epoxy-PDMS) | Second component (3, 4-dihydroxybenzoic acid) | |
| Example B1 | 1 | 0.5 | absent |
| Example B2 | 1 | 0.75 | absent |
| Example B3 | 1 | 1 | absent |

Catechol/Epoxy-PDMS according to Example B1 was obtained by mixing Epoxy-PDMS (0.015 mmol, 0.1453 g) (9,685.076 g/mol) and 3,4-dihydroxybenzoic acid (0.33675 mmol, 0.0530 g) (154.12 g/mol, 98.0%), and subsequently stirring the resultant at room temperature over a period of two days.

Catechol/Epoxy-PDMS according to Example B2 was obtained by mixing Epoxy-PDMS (0.015 mmol, 0.1453 g) (9,685.076 g/mol) and 3,4-dihydroxybenzoic acid (0.505125 mmol, 0.0794 g) (154.12 g/mol, 98.0%), and subsequently stirring the resultant at room temperature over a period of two days.

Catechol/Epoxy-PDMS according to Example B3 was obtained by mixing Epoxy-PDMS (0.015 mmol, 0.1453 g) (9,685.076 g/mol) and 3,4-dihydroxybenzoic acid (0.6735 mmol, 0.1059 g) (154.12 g/mol, 98.0%), and subsequently stirring the resultant at room temperature over a period of two days.

### [Evaluation of Adhesiveness of Example B]

Table 6 shows the shear strength that is the maximum shear stress measured for evaluation samples according to Examples B1 to B3. The evaluation samples in which adhesion surfaces had an area of 125 mm² were prepared in the same manner as in Example A, and the shear stress was measured in the same manner as in Example A. Further, for comparison, an evaluation sample according to Comparative Example B was prepared using only Epoxy-PDMS of the first component as an adhesive agent without the second component, and the shear stress was measured in the same manner.

**TABLE 6**

| | Shear strength |
|---|---|
| | Al-Al (125mm²) |
| Example B1 | ≥8.16 MPa |
| Example B2 | ≥8.16 MPa |
| Example B3 | ≥8.16 MPa |
| Comparative Example B | × |

As shown in Table 6, all of Examples B1 to B3 exhibited a sufficient adhesive strength for the materials of the same kind, such as Al-Al. On the other hand, a sufficient adhesiveness was not obtained in Comparative Example B in which only the first component was used as an adhesive agent.

Further, in order to check the shear stress occurring when substrates are detached from each other, evaluation samples having a reduced area of adhesion surfaces were prepared, and the tensile shear test was conducted again.

Table 7 shows the shear strength that is the maximum shear stress measured for each of the evaluation samples according to Examples B1 to B3. In Table 7, the area of the adhesion surfaces is shown in parentheses ( ).

**TABLE 7**

| | Shear strength |
|---|---|
| | Al-Al (25mm²) |
| Example B1 | 28.36 MPa |
| Example B2 | 27.69 MPa |
| Example B3 | 25.63 MPa |

According to the above results, even when a linear siloxane is used as the first component, the carboxy group serving as a ring-opening functional group in the second component ring-opens the epoxy groups in the first component during a heating process, whereby the first component and the second component are bound to each other. Further, in this heating process, radicals are generated on the aromatic ring of the second component in the resulting bound compound, causing a coupling reaction to proceed. The progress of these reactions in a sequential manner leads to an increase in the molecular weight of the compound consisting of the first component and the second component, and brings about a crosslinking reaction that three-dimensionally binds siloxanes of the compound with each other, as a result of which a sufficient adhesive strength is obtained. On the other hand, in Comparative Example B, the second component is not used, and the action of ring-opening the epoxy groups in the first component is not sufficiently obtained; therefore, curing of the heat-curable composition does not sufficiently proceed even with heating.

### [Evaluation of Heat Resistance of Example B]

Table 8 shows the results of conducting a heat resistance test for the evaluation samples according to Examples B1 to B3. The temperature at which an adhered state of the pair of substrates was maintained was checked in the same manner as in Example A.

**TABLE 8**

| | Temperature at which adhered state was confirmed to be maintained | |
|---|---|---|
| | Al-Al | Al-SUS |
| Example B1 | 150°C | 150°C |
| Example B2 | 150°C | 150°C |
| Example B3 | 150°C | 150°C |

As shown in Table 8, all of Examples B1 to B3 exhibited a sufficient heat resistance. It was confirmed that the adhesiveness was maintained even when the temperature of each evaluation sample was lowered to room temperature.

Thus far, Examples A and B have been described. Hereinafter, for the purpose of exploring a particularly preferred mode of the phenol used as the second component, the results obtained by making various changes to the second component are described.

### [Examples C to G]

As illustrated in FIG. 4, heat-curable compositions according to Examples C to G were produced using, as the second component, regioisomers of the dihydric phenol used in Examples A and B. In all of Examples C to G, the cyclic siloxane tetramer (Epoxy-CyTS) illustrated in FIG. 8 was used as the first component.

Table 9 shows the production conditions of the heat-curable compositions according to Examples C to G. In Table 9, the added amount of the second component with respect to the amount of the first component is shown as a molar ratio to epoxy groups, which is a molar ratio with respect to the epoxy groups contained in Epoxy-CyTS constituting the first component, in parentheses ( ). It is noted here that the numerical value "1" shown in parentheses ( ) in the column of "First component" indicates that, in the calculation of the molar ratio to epoxy groups, a ratio of a total number of the epoxy groups contained in the first component was used as a reference value.

**TABLE 9**

| | Molar ratio with respect to epoxy groups | | Presence or absence of mixing solvent |
|---|---|---|---|
| | First component | Second component | |
| Example C | Epoxy-CyTS (1) | 3, 5-dihydroxybenzoic acid (0.25) | absent |
| Example D | Epoxy-CyTS (1) | 2, 3-dihydroxybenzoic acid (0.25) | absent |
| Example E | Epoxy-CyTS (1) | 2, 4-dihydroxybenzoic acid (0.25) | absent |
| Example F | Epoxy-CyTS (1) | 2, 5-dihydroxybenzoic acid (0.25) | absent |
| Example G | Epoxy-CyTS (1) | 2, 6-dihydroxybenzoic acid (0.25) | absent |

The heat-curable composition according to Example C was obtained by mixing Epoxy-CyTS (0.2 mmol, 0.1394 g) (697.07 g/mol) and 3,5-dihydroxybenzoic acid (0.2 mmol, 0.0315 g) (154.12 g/mol, 98.0%), and subsequently stirring the resultant at room temperature over a period of two days.

The heat-curable composition according to Example D was obtained by mixing Epoxy-CyTS (0.2 mmol, 0.1394 g) (697.07 g/mol) and 2,3-dihydroxybenzoic acid (0.2 mmol, 0.0315 g) (154.12 g/mol, 98.0%), and subsequently stirring the resultant at room temperature over a period of two days.

The heat-curable composition according to Example E was obtained by mixing Epoxy-CyTS (0.2 mmol, 0.1394 g) (697.07 g/mol) and 2,4-dihydroxybenzoic acid (0.2 mmol, 0.0315 g) (154.12 g/mol, 98.0%), and subsequently stirring the resultant at room temperature over a period of two days.

The heat-curable composition according to Example F was obtained by mixing Epoxy-CyTS (0.2 mmol, 0.1394 g) (697.07 g/mol) and 2,5-dihydroxybenzoic acid (0.2 mmol, 0.0315 g) (154.12 g/mol, 98.0%), and subsequently stirring the resultant at room temperature over a period of two days.

The heat-curable composition according to Example G was obtained by mixing Epoxy-CyTS (0.2 mmol, 0.1394 g) (697.07 g/mol) and 2,6-dihydroxybenzoic acid (0.2 mmol, 0.0315 g) (154.12 g/mol, 98.0%), and subsequently stirring the resultant at room temperature over a period of two days.

### [Evaluation of Adhesiveness of Examples C to G]

Table 10 shows the shear stress measured for evaluation samples according to Examples C to G. The evaluation samples were prepared in the same manner as in Example A, and the shear stress was measured in the same manner as in Example A.

**TABLE 10**

| | Shear strength (125mm²) | | | | |
|---|---|---|---|---|---|
| | Al-Al | PBT-PBT | PPS-PPS | Al-SUS | Al-PPS |
| Example C | ≥8.16 MPa | 3.25 MPa | ≥8.16 MPa | ≥8.16 MPa | ≥8.16 MPa |
| Example D | 2.07 MPa | 0.66 MPa | 1.73 MPa | 4.92 MPa | 0.89 MPa |
| Example E | ≥8.16 MPa | 3.74 MPa | 6.08 MPa | ≥8.16 MPa | ≥8.16 MPa |
| Example F | ≥8.16 MPa | 3.42 MPa | 5.08 MPa | ≥8.16 MPa | 3.97 MPa |
| Example G | 3.33 MPa | 1.45 MPa | 1.40 MPa | 2.58 MPa | 1.23 MPa |

The evaluation results shown in Table 10 are discussed below. Examples C to G are common in that, as illustrated in FIG. 4, they were produced using a dihydric phenol as the second component. As shown in Table 10, Examples C to G exhibited a sufficient adhesive strength not only for the materials of the same kind, but also for the materials of different kinds.

However, as shown in Table 10, the adhesive properties of Examples D and G are relatively inferior to those of Examples C, E, and F. Further, as illustrated in FIG. 4, a dihydric phenol was used as the second component in the above-described Example A as well. However, as seen by comparing the evaluation results shown in Table 2 and the evaluation results of Example E shown in Table 10, the adhesive properties of Examples D and G are also relatively inferior to those of Example A.

A difference in chemical structure between the dihydric phenols according to Examples D and G and the dihydric phenols according to Examples A, C, E, and F lies in the positions of hydroxy groups relative to a carboxy group. In other words, as illustrated in FIG. 4, among the dihydric phenols according to Examples A and C to G, only the dihydric phenols according to Examples D and G, which exhibited relatively poor adhesive properties, have a chemical structure in which a carboxy group and two hydroxy groups are arranged adjacent to one another.

That is, in the dihydric phenols according to Examples D and G, the two hydroxy groups and the carboxy group exist close to each other. Therefore, it is believed that adhesion with a substrate is unlikely to be expressed due to steric hindrance. This is believed to be the reason why the adhesive properties of Examples D and G are inferior to those of Examples A, C, E, and F.

Regarding the evaluation samples shown in Table 10 in which the substrates were not detached from each other, in order to check the shear stress occurring when the substrates are detached, evaluations samples in which the area of the adhesion surfaces of substrates of the same material, such as Al-Al, was reduced to 25 mm² were prepared for representative Examples C, E, and F, and the tensile shear test was conducted again.

Table 11 shows the shear strength that is the maximum shear stress measured for each of the evaluation samples according to Examples C, E, and F. In Table 11, the area of the adhesion surfaces is shown in parentheses ( ).

**TABLE 11**

| | Shear strength |
|---|---|
| | Al-Al (25mm²) |
| Example C | 21.47 MPa |
| Example E | 17.13 MPa |
| Example F | 14.13 MPa |

### [Evaluation of Heat Resistance of Examples C to G]

Table 12 shows the results of conducting a heat resistance test for the evaluation samples according to Examples C to G. The temperature at which an adhered state of the pair of substrates was maintained was checked in the same manner as in Example A.

**TABLE 12**

| | Temperature at which adhered state was confirmed to be maintained |
|---|---|
| | Al-SUS |
| Example C | 150°C |
| Example D | 150°C |
| Example E | 150°C |
| Example F | 150°C |
| Example G | 150°C |

As shown in Table 12, all of Examples C to G exhibited a sufficient heat resistance for a combination of substrates, Al-SUS. It was confirmed that the adhesiveness was maintained even when the temperature of each evaluation sample was lowered to room temperature.

### [Evaluation of Impact Resistance of Examples C, E, and F]

For representative evaluation samples of Examples C, E, and F in which the pair of substrates were made of aluminum, an impact resistance test was conducted in the same manner as in Example A. As a result, the adhesion surfaces of these evaluation samples were not detached even when hit twice with a hammer, and deformation of the aluminum substrates was observed. In other words, sufficient impact resistance was confirmed.

### [Examples H to J and Comparative Example 1]

Next, Examples H to J in which a monohydric phenol was used as the second component, and Comparative Example 1 in which benzoic acid was used as the second component are described.

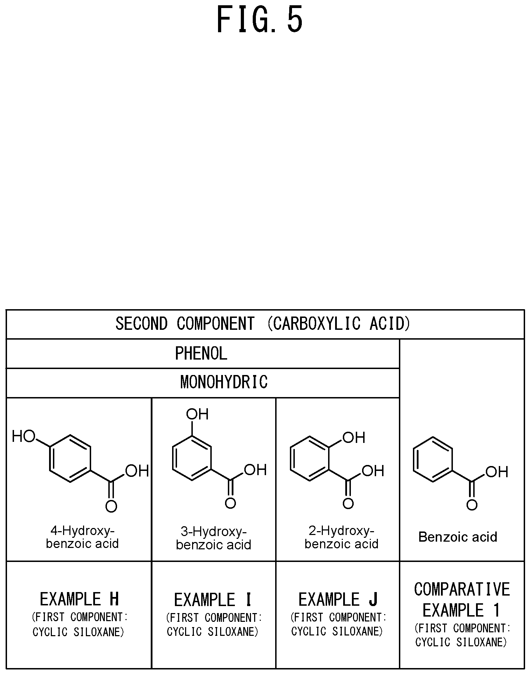

As illustrated in FIG. 5, the monohydric phenols used as the second component in Examples H to J are in a regioisomeric relationship with each other. In all of Examples H to J and Comparative Example 1, the cyclic siloxane tetramer (Epoxy-CyTS) illustrated in FIG. 8 was used as the first component.

Table 13 shows the production conditions of the heat-curable compositions according to Examples H to J and Comparative Example 1. In Table 13, the added amount of the second component with respect to the amount of the first component is shown as a molar ratio to epoxy groups, which is a molar ratio with respect to the epoxy groups contained in Epoxy-CyTS constituting the first component, in parentheses ( ). It is noted here that the numerical value "1" shown in parentheses ( ) in the column of "First component" indicates that, in the calculation of the molar ratio to epoxy groups, a ratio of a total number of the epoxy groups contained in the first component was used as a reference value.

**TABLE 13**

| | Molar ratio with respect to epoxy groups | | Presence or absence of mixing solvent |
|---|---|---|---|
| | First component | Second component | |
| Example H | Epoxy-CyTS (1) | 4-hydroxybenzoic acid (0.25) | absent |
| Example I | Epoxy-CyTS (1) | 3-hydroxybenzoic acid (0.25) | absent |
| Example J | Epoxy-CyTS (1) | 2-hydroxybenzoic acid (0.25) | absent |
| Comparative Example 1 | Epoxy-CyTS (1) | benzoic acid (0.25) | absent |

The heat-curable composition according to Example H was obtained by mixing Epoxy-CyTS (0.2 mmol, 0.1394 g) (697.07 g/mol) and 4-hydroxybenzoic acid (0.2 mmol, 0.0279 g) (138.12 g/mol, 99.0%), and subsequently stirring the resultant at room temperature over a period of two days.

The heat-curable composition according to Example I was obtained by mixing Epoxy-CyTS (0.2 mmol, 0.1394 g) (697.07 g/mol) and 3-hydroxybenzoic acid (0.2 mmol, 0.0282 g) (138.12 g/mol, 98.0%), and subsequently stirring the resultant at room temperature over a period of two days.

The heat-curable composition according to Example J was obtained by mixing Epoxy-CyTS (0.2 mmol, 0.1394 g) (697.07 g/mol) and 2-hydroxybenzoic acid (0.2 mmol, 0.0278 g) (138.12 g/mol, 99.5%), and subsequently stirring the resultant at room temperature over a period of two days.

The heat-curable composition according to Comparative Example 1 was obtained by mixing Epoxy-CyTS (0.2 mmol, 0.1394 g) (697.07 g/mol) and benzoic acid (0.2 mmol, 0.0245 g) (122.12 g/mol, 99.5%), and subsequently stirring the resultant at room temperature over a period of two days.

### [Evaluation of Adhesiveness of Examples H to J and Comparative Example 1]

Table 14 shows the shear stress measured for evaluation samples according to Examples H to J and Comparative Example 1. The evaluation samples were prepared in the same manner as in Example A, and the shear stress was measured in the same manner as in Example A.

**TABLE 14**

| | Shear strength (125mm²) | | | |
|---|---|---|---|---|
| | Al-Al | PBT-PBT | PPS-PPS | Al-SUS |
| Example H | 6.63 MPa | 2.53 MPa | 4.15 MPa | 6.38 MPa |
| Example I | 5.92 MPa | 1.24 MPa | 2.49 MPa | 5.46 MPa |
| Example J | 0.89 MPa | 0.47 MPa | 0.20 MPa | 0.92 MPa |
| Comparative Example 1 | 0.46 MPa | × | - | - |

The evaluation results shown in Table 14 are discussed below. As shown in Table 14, in Comparative Example 1 in which benzoic acid having no hydroxy group was used as the second component, sufficient adhesiveness was not obtained. On the other hand, in Examples H to J in which a phenol having one hydroxy group was used as the second component, a practical adhesive strength was obtained.

From these results, a hydroxy group is said to be essential for obtaining a sufficient adhesive strength. In other words, it is believed that interactions, such as hydrogen bonding by hydroxy group, contribute to strong adhesion with a substrate. Accordingly, the second component needs to be a mono- or higher-hydric phenol.

Next, evaluation results that were obtained using a monohydric phenol as the second component are discussed. As shown in Table 14, Examples H and I exhibited a sufficient strength not only for the materials of the same kind, but also for the materials of different kinds. Further, Example J also exhibited a practical adhesive strength for the materials of the same kind, as well as for the materials of different kinds, such as Al-SUS. Therefore, the heat-curable compositions according to Examples H to J are all suitable for the use as an adhesive agent.

However, as shown in Table 14, the adhesive properties of Example J are relatively inferior to those of Examples H and I. A difference in chemical structure between the monohydric phenol according to Example J and the monohydric phenols according to Examples H and I lies in the positions of a hydroxy group relative to a carboxy group. In other words, as illustrated in FIG. 5, among the monohydric phenols according to Examples H to J, only the monohydric phenol according to Example J, which exhibited relatively poor adhesive properties, have a hydroxy group next to a carboxy group, that is, at the 2-position.

As described above, a hydroxy group is necessary for obtaining strong adhesion with a substrate through hydrogen bonding. However, when a hydroxy group is arranged at the 2-position of a benzene ring, the hydroxy group and the carboxy group are close to each other; therefore, it is believed that adhesion with the substrate is unlikely to be expressed due to steric hindrance.

In this manner, the reason why the adhesive properties of Example J are inferior to those of Examples H to J in Table 14 is also believed to be steric hindrance, which is the same as the above-described reason why the adhesive properties of Examples D and G are inferior to those of Examples A, C, E, and F in Table 10.

### [Examples K to M]

Next, Examples K to M in which a trihydric phenol was used as the second component are described.

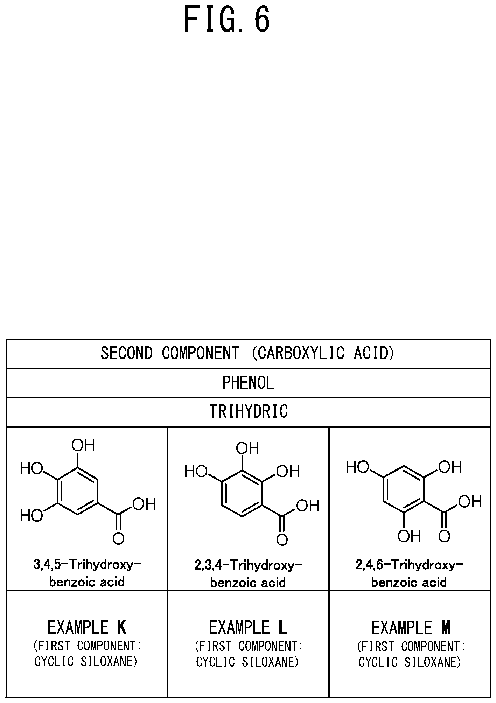

As illustrated in FIG. 6, the trihydric phenols used as the second component in Examples K to M are in a regioisomeric relationship with each other. In all of Examples K to M, the cyclic siloxane tetramer (Epoxy-CyTS) illustrated in FIG. 8 was used as the first component.

Table 15 shows the production conditions of the heat-curable compositions according to Examples K to M. In Table 15, the added amount of the second component with respect to the amount of the first component is shown as a molar ratio to epoxy groups, which is a molar ratio with respect to the epoxy groups contained in Epoxy-CyTS constituting the first component, in parentheses ( ). It is noted here that the numerical value "1" shown in parentheses ( ) in the column of "First component" indicates that, in the calculation of the molar ratio to epoxy groups, a ratio of a total number of the epoxy groups contained in the first component was used as a reference value.

**TABLE 15**

| | Molar ratio with respect to epoxy groups | | Presence or absence of mixing solvent |
|---|---|---|---|
| | First component | Second component | |
| Example K1 | Epoxy-CyTS (1) | 3, 4, 5-trihydroxybenzoic acid (0.25) | absent |
| Example K2 | Epoxy-CyTS (1) | 3, 4, 5-trihydroxybenzoic acid (0.5) | absent |
| Example L | Epoxy-CyTS (1) | 2, 3, 4-trihydroxybenzoic acid (0.25) | absent |
| Example M | Epoxy-CyTS (1) | 2, 4, 6-trihydroxybenzoic acid (0.25) | absent |

The heat-curable composition according to Example K1 was obtained by mixing Epoxy-CyTS (0.2 mmol, 0.1394 g) (697.07 g/mol) and 3,4,5-trihydroxybenzoic acid hydrate (0.2 mmol, 0.0347 g) (170.12 g/mol, 98.0%), and subsequently stirring the resultant at room temperature over a period of two days.

The heat-curable composition according to Example K2 was obtained by mixing Epoxy-CyTS (0.2 mmol, 0.1394 g) (697.07 g/mol) and 3,4,5-trihydroxybenzoic acid hydrate (0.4 mmol, 0.0694 g) (170.12 g/mol, 98.0%), and subsequently stirring the resultant at room temperature over a period of two days.

The heat-curable composition according to Example L was obtained by mixing Epoxy-CyTS (0.2 mmol, 0.1394 g) (697.07 g/mol) and 2,3,4-trihydroxybenzoic acid (0.2 mmol, 0.0347 g) (170.12 g/mol, 98.0%), and subsequently stirring the resultant at room temperature over a period of two days.

The heat-curable composition according to Example M was obtained by mixing Epoxy-CyTS (0.2 mmol, 0.1394 g) (697.07 g/mol) and 2,4,6-trihydroxybenzoic acid monohydrate (0.2 mmol, 0.0396 g) (188.14 g/mol, 95.0%), and subsequently stirring the resultant at room temperature over a period of one day.

### [Evaluation of Adhesiveness of Examples K to M]

Table 16 shows the shear stress measured for evaluation samples according to Examples K to M. The evaluation samples were prepared in the same manner as in Example A, and the shear stress was measured in the same manner as in Example A.

**TABLE 16**

| | Shear strength (125mm²) | | | | |
|---|---|---|---|---|---|
| | Al-Al | PBT-PBT | PPS-PPS | Al-SUS | Al-PPS |
| Example K1 | ≥8.16 MPa | 5.29 MPa | ≥8.16 MPa | ≥8.16 MPa | 8.00 MPa |
| Example K2 | ≥8.16 MPa | 5.35 MPa | ≥8.16 MPa | ≥8.16 MPa | ≥8.16 MPa |
| Example L | ≥8.16 MPa | 3.8 MPa | 5.51 MPa | ≥8.16 MPa | ≥8.16 MPa |
| Example M | ≥8.16 MPa | 3.27 MPa | 5.77 MPa | ≥8.16 MPa | 3.97 MPa |

As shown in Table 16, in all of Examples K to M, a sufficient adhesive strength was obtained not only for the materials of the same kind, such as Al-Al, PBT-PBT, and PPS-PPS, but also for the materials of different kinds, such as Al-SUS and Al-PPS. Therefore, the heat-curable compositions according to Examples K to M are all suitable for the use as an adhesive agent.

As shown in Table 16, among Examples K to M, Example K exhibited particularly excellent adhesive properties. As illustrated in FIG. 6, the trihydric phenol according to Example K has a structure in which a hydroxy group is not arranged adjacent to a carboxy group on either side. It is believed that this structure, which is unlikely to be affected by steric hindrance, was effective.

Regarding the evaluation samples shown in Table 16 in which the substrates were not detached from each other, in order to check the shear stress occurring when the substrates are detached, evaluations samples in which the area of the adhesion surfaces of substrates of the same material, typically Al-Al, was reduced to 25 mm² were prepared for Examples K to M, and the tensile shear test was conducted again.

Table 17 shows the shear strength that is the maximum shear stress measured for each of the evaluation samples according to Examples K to M. In Table 17, the area of the adhesion surfaces is shown in parentheses ( ).

**TABLE 17**

| | Shear strength |
|---|---|
| | Al-Al (25mm²) |
| Example K1 | 20.87 MPa |
| Example L | 11.74 MPa |
| Example M | 13.09 MPa |

### [Evaluation of Heat Resistance of Examples K to M]

Table 18 shows the results of conducting a heat resistance test for the evaluation samples according to Examples K to M. The temperature at which an adhered state of the pair of substrates was maintained was checked in the same manner as in Example A.

**TABLE 18**

| | Temperature at which adhered state was confirmed to be maintained | |
|---|---|---|
| | Al-Al | Al-SUS |
| Example K1 | 250°C | 150°C |
| Example K2 | 220°C | 150°C |
| Example L | 250°C | 150°C |
| Example M | 250°C | 150°C |

As shown in Table 18, all of Examples K to M exhibited a sufficient heat resistance. It was confirmed that the adhesiveness was maintained even when the temperature of each evaluation sample was lowered to room temperature.

### [Evaluation of Impact Resistance of Examples K2 and L]

For representative evaluation samples of Examples K2 and L in which the pair of substrates were made of aluminum, an impact resistance test was conducted in the same manner as in Example A. As a result, the adhesion surfaces of these evaluation samples were not detached even when hit with a hammer, and deformation of the aluminum plates was observed. In other words, sufficient impact resistance was confirmed.

### [Summary of Discussion]

From the above discussions on the evaluation results shown in Tables 10, 14, and 16, generally, in the benzene ring constituting the phenol of the second component, it can be said preferable that a hydroxy group be arranged at a position other than adjacent to the carboxy group serving as a ring-opening functional group, that is, at least one of the 3-, 4-, and 5-positions, so as to make the benzene ring less susceptible to the effect of steric hindrance.

It is noted here that it is acceptable for a hydroxy group to be arranged at the 2- or 6-position of the benzene ring. Examples D, E, F, G, J, L, and M, in which a hydroxy group is arranged at the 2- or 6-position of the benzene ring, exhibited practical adhesiveness as adhesive agents. The fact that Example D shown in Table 10 exhibited superior evaluation results than Example J shown in Table 14 suggests that, even if a hydroxy group is arranged at the 2-position of the benzene ring, excellent adhesive properties can be obtained as compared to a case where a hydroxy group is arranged only at the 2-position, as long as another hydroxy group is further arranged at at least one of the 3-, 4-, and 5-positions.

However, from the fact that Example K among Examples K to M exhibited relatively excellent adhesive properties as shown in Table 15, it is generally considered more preferable that no hydroxy group be arranged adjacent to the carboxy group in the benzene ring constituting the phenol of the second component, that is, at the 2- and 6-positions. In other words, it is considered preferable that only hydrogen atoms be bound to the carbon atoms at the 2- and 6-positions of the benzene ring constituting the phenol of the second component.

Further, from the fact that Example A5 shown in Table 2 and Example K shown in Table 16 exhibited superior evaluation results than Examples H and I shown in Table 14, it is generally considered that, in the benzene ring constituting the phenol of the second component, the greater the number of hydroxy groups at positions other than the 2- and 6-positions, the more preferred it is.

### [Example N]

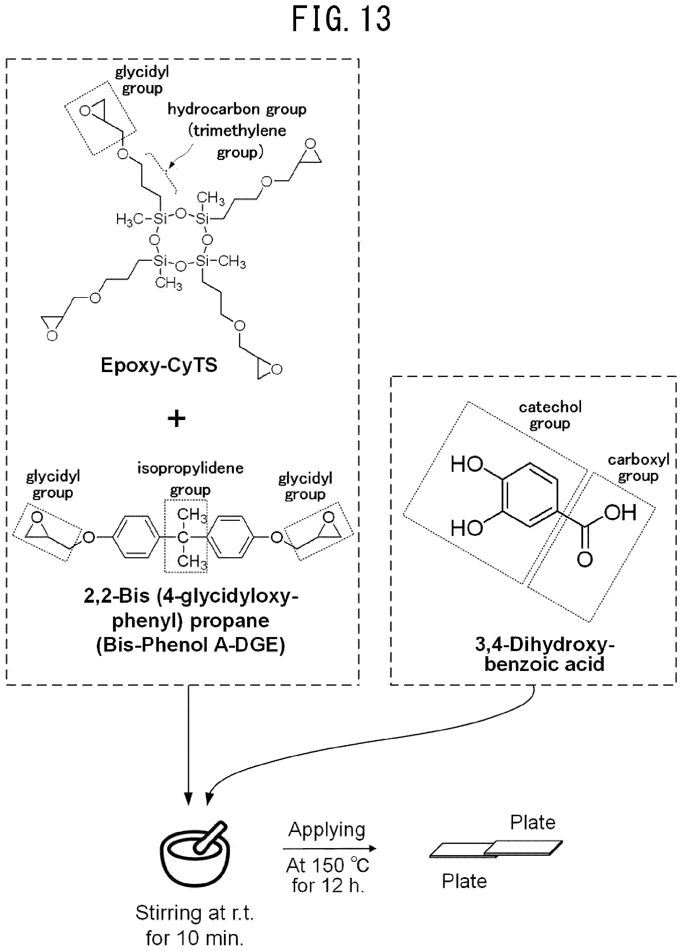

Next, the method of producing heat-curable compositions according to Example N is described below with reference to FIG. 13.

As the first component according to Example N, Epoxy-CyTS illustrated in FIG. 8 and bisphenol A diglycidyl ether (hereinafter, denoted as "Bis-Phenol A-DGE") were prepared. Epoxy-CyTS was produced by the same procedure as in Example A.

Bis-Phenol A-DGE illustrated in FIG. 13 is one example of the bisphenol-type epoxy illustrated in FIG. 3. Further, in Bis-Phenol A-DGE illustrated in FIG. 13, the glycidyl group is one example of the epoxy-containing group R^{A3} illustrated in FIG. 3, and the isopropylidene group is one example of the linking group X illustrated in FIG. 3.

On another front, as the second component according to Example N, the same 3,4-dihydroxybenzoic acid as the one used in Example A was prepared.

Subsequently, the first component consisting of Epoxy-CyTS and Bis-Phenol A-DGE, and the second component consisting of 3,4-dihydroxybenzoic acid were ground and mixed using a mortar to obtain heat-curable compositions according to Example N.

Table 19 shows the production conditions of the heat-curable compositions according to Example N. In Table 19, the charged molar ratio, which is a molar ratio of Epoxy-CyTS, Bis-Phenol A-DGE, and 3,4-dihydroxybenzoic acid at the time of mixing, is shown in parentheses < >. Further, in Table 19, the molar ratio to epoxy groups, which is a molar ratio of the second component with respect to the epoxy groups contained in the first component, is also shown.

**TABLE 19**

| | Charged molar ratio | | | Molar ratio of second component with respect to epoxy groups |
|---|---|---|---|---|
| | First component | | Second component | |
| | Epoxy-CyTS | Bis-Phenol A -DGE | 3,4-dihydroxybenzoic acid | |
| Example N1 | <0.75> | <0.5> | <1> | 0.25 |
| Example N2 | <0.5> | <1> | <1> | 0.25 |
| Example N3 | <0.25> | <1.5> | <1> | 0.25 |

### [Evaluation of Adhesiveness of Example N]

Using each heat-curable composition according to Examples N1 to N3 as an adhesive agent, evaluation samples in which substrates of the same material, Al-Al, were bonded together were prepared in the same manner as in Example A. The substrates, after the adhesive agent was applied thereto, were heated at 150°C for 12 hours in a state of being fixed with clips. The adhesion surfaces had an area of 25 mm².
Subsequently, the shear stress was measured by conducting a tensile shear test in which the pair of substrates were pulled from each other in a direction parallel to the adhesion surfaces.

Table 20 shows the shear strength that is the maximum shear stress measured for each of the evaluation samples according to Examples N1 to N3. **In** Table 20, the area of the adhesion surfaces is shown in parentheses ( ).

**TABLE 20**

| | Shear strength |
|---|---|
| | Al-Al (25mm²) |
| Example N1 | 30.3 MPa |
| Example N2 | 36.1 MPa |
| Example N3 | 39.3 MPa |

It is noted here that Examples N1 to N3 shown in Table 20 and Example A5 shown in Table 1 have the same molar ratio to epoxy groups. From the comparison between Examples N1 to N3 shown in Table 20 and Example A5 shown in Table 3, it was found that, even at the same molar ratio to epoxy groups, superior adhesiveness was obtained by using, as the first component, a bisphenol-type epoxy in combination with a siloxane.

### [Evaluation of Heat Resistance of Example N]

Using each heat-curable composition according to Examples N1 to N3 as an adhesive agent, evaluation samples in which different kinds of substrates, Al-SUS, were bonded together were prepared in the same manner as in Example A. The adhesion surfaces had an area of 125 mm². The same heating conditions as in Example A, in which the substrates were heated at 150°C for 12 hours in a state of being fixed with clips, were employed.

For each of the thus prepared evaluation samples, a heat resistance test was conducted in the same manner as in Example A to check the temperature at which an adhered state of the substrates was maintained. As a result, it was confirmed that an adhered state of the substrates was maintained even at an elevated temperature of 150°C. It was also confirmed that the adhesiveness was maintained even when the temperature of each evaluation sample was subsequently lowered to room temperature.

### [Evaluation of Impact Resistance of Example N]

Using each heat-curable composition according to Examples N1 to N3 as an adhesive agent, evaluation samples in which substrates of the same material, Al-Al, were bonded together were prepared in the same manner as in Example A. The adhesion surfaces had an area of 125 mm². The same heating conditions as in Example A, in which the substrates were heated at 150°C for 12 hours in a state of being fixed with clips, were employed.

For each of the thus prepared evaluation samples, an impact resistance test was conducted in the same manner as in Example A. As a result, the adhesion surfaces of each evaluation sample were not detached even when hit with a hammer, and deformation of the aluminum substrates was observed. In other words, sufficient impact resistance was confirmed.

### [Examples O to V]

Next, Examples O to V in which the acyclic aliphatic compounds illustrated in FIG. 7 were each used as the second component are described. In all of Examples O to V, Epoxy-CyTS illustrated in FIG. 8 was used as the first component. Epoxy-CyTS was produced by the same procedure as in Example A. The first component consisting of Epoxy-CyTS and the second component consisting of each acyclic aliphatic compound were ground and mixed using a mortar to obtain heat-curable compositions according to Examples O to V.

The second component according to Example O consists of phosphonoacetic acid illustrated in FIG. 7. Phosphonoacetic acid has a structure in which a carboxy group serving as a ring-opening functional group is bound to one end of a main chain. Phosphonoacetic acid also has two hydroxy groups at the other end of the main chain, or an end of a side chain.

The second component according to Example P consists of citric acid illustrated in FIG. 7. Citric acid has a structure in which a carboxy group serving as a ring-opening functional group is bound to both ends of a main chain. Citric acid also has a carboxy group at an end of a side chain. Further, citric acid has a hydroxy group at an end of another side chain.

The second component according to Example Q consists of tartaric acid illustrated in FIG. 7. Tartaric acid has a structure in which a carboxy group serving as a ring-opening functional group is bound to both ends of a main chain. Tartaric acid also has a hydroxy group at each end of two side chains.

The second component according to Example R consists of itaconic acid illustrated in FIG. 7. Itaconic acid has a structure in which a carboxy group serving as a ring-opening functional group is bound to both ends of a main chain.

The second component according to Example S consists of malonic acid illustrated in FIG. 7. Malonic acid also has a structure in which a carboxy group serving as a ring-opening functional group is bound to both ends of a main chain.

The second component according to Example T consists of succinic acid illustrated in FIG. 7. Succinic acid also has a structure in which a carboxy group serving as a ring-opening functional group is bound to both ends of a main chain.

The second component according to Example U consists of adipic acid illustrated in FIG. 7. Adipic acid also has a structure in which a carboxy group serving as a ring-opening functional group is bound to both ends of a main chain.

The second component according to Example V consists of suberic acid illustrated in FIG. 7. Suberic acid also has a structure in which a carboxy group serving as a ring-opening functional group is bound to both ends of a main chain.

Table 21 shows the production conditions of the heat-curable compositions according to Examples O to V. In Table 21, the charged molar ratio, which is a molar ratio of the first component and the second component at the time of mixing, is shown in parentheses < >. Further, in Table 21, the molar ratio to epoxy groups, which is a molar ratio of the second component with respect to the epoxy groups contained in the first component, is also shown.

**TABLE 21**

| | Charged molar ratio | | Molar ratio of second component with respect to epoxy groups | Shear strength Al-Al (75mm²) |
|---|---|---|---|---|
| | First component (Siloxane) | Second component (Acyclic aliphatic compound) | | |
| Example O | Epoxy-CyTS <1> | Phosphonoacetic acid <1> | 0.25 | 13.5 MPa |
| Example P | Epoxy-CyTS <1> | Citric acid <1> | 0.25 | ≥ 13.6 MPa |
| Example Q | Epoxy-CyTS <1> | Tartaric acid <1> | 0.25 | ≥ 13.6 MPa |
| Example R | Epoxy-CyTS <1> | Itaconic acid <1> | 0.25 | 4.97 MPa |
| Example S | Epoxy-CyTS <1> | Malonic acid <1> | 0.25 | 2.47 MPa |
| Example T | Epoxy-CyTS <1> | Succinic acid <1> | 0.25 | 9.15 MPa |
| Example U | Epoxy-CyTS <1> | Adipic acid <1> | 0.25 | 4.55 MPa |
| Example V | Epoxy-CyTS <1> | Suberic acid <1> | 0.25 | 3.68 MPa |

### [Evaluation of Adhesiveness of Examples O to V]

Using each heat-curable composition according to Examples O to V as an adhesive agent, evaluation samples in which substrates of the same material, Al-Al, were bonded together were prepared in the same manner as in Example A. The adhesion surfaces had an area of 75 mm². The same heating conditions as in Example A, in which the substrates were heated at 150°C for 12 hours in a state of being fixed with clips, were employed. Subsequently, the shear stress was measured by conducting a tensile shear test in which the pair of substrates were pulled from each other in a direction parallel to the adhesion surfaces.

Table 21 also shows the shear strength that is the maximum shear stress measured for each of the evaluation samples according to Examples O to V. It is noted here that, with regard to the evaluation samples according to Examples P and Q, the adhesion surfaces were not detached even with an application of the maximum tensile force outputtable by the tensile shear tester used.

As shown in Table 21, particularly excellent adhesiveness was obtained when phosphonoacetic acid, citric acid, or tartaric acid was used as the acyclic aliphatic compound of the second component. As illustrated in FIG. 7, phosphonoacetic acid, citric acid, and tartaric acid, unlike other acyclic aliphatic compounds, have at least one hydroxy group in addition to a carboxy group serving as a ring-opening functional group. It is believed that the adhesive strength was improved by the formation of a hydrogen bond derived from the hydroxy group between each adhesive agent and the substrates to which the adhesive agent was applied.

Therefore, the acyclic aliphatic compound of the second component is particularly preferably one having a structure in which a hydroxy group is bound to an end different from the end to which a carboxy group serving as a ring-opening functional group is bound, specifically phosphonoacetic acid, citric acid, or tartaric acid.

### [Confirmation of Adhesiveness with Changes in Heating Conditions]

Using the adhesive agents according to Examples O to Q that exhibited excellent adhesiveness in Table 21, the adhesiveness in the case of changing the heating conditions was checked. Specifically, using the adhesive agents according to Examples O to Q, evaluation samples were prepared under the same conditions as described above, except that the heating compositions of heating at 150°C for 12 hours were changed to heating at 80°C for 2 hours. Subsequently, for each of the thus prepared evaluation samples, the shear stress was measured in the same manner as described above.

As a result, the shear stress was measured to be no different from the case where the above-described heating conditions of heating at 150°C for 12 hours were employed. Similarly, even when the heating conditions were changed to heating at 80°C for 1 hour, the shear stress was measured to be no different from the case where the above-described heating conditions were employed. In this manner, it was found that the heating temperature required for curing can be lowered and the heating time required for curing can be shortened by using an acyclic aliphatic compound as the second component.

### [Confirmation of Adhesiveness to CFRP]

Using the adhesive agent according to Example O, an evaluation sample in which a pair of substrates made of CFRP (carbon fiber-reinforced plastic) were bonded together was prepared. The adhesion surfaces had an area of 25 mm². The same preparation conditions as in Example A, in which the substrates were heated at 150°C for 12 hours in a state of being fixed with clips, were employed. When the shear strength of the evaluation sample was subsequently measured, a high shear stress of 22.7 MPa was measured.

Further, using the adhesive agent according to Example O, an evaluation sample in which substrates of the same kind, Al-CFRP, were bonded together was prepared in the same manner. The adhesion surfaces had an area of 25 mm². The same preparation conditions as in Example A, in which the substrates were heated at 150°C for 12 hours in a state of being fixed with clips, were employed.

When the shear strength of this evaluation sample was subsequently measured, a high shear stress of 26.4 MPa was measured. Further, it was confirmed that the adhesion of the substrates was maintained even when the temperature of the evaluation sample was changed between room temperature and 150°C. As described above, it was found that the adhesive agent using an acyclic aliphatic compound as the second component exhibits excellent adhesiveness to CFRP.

### [Example W]

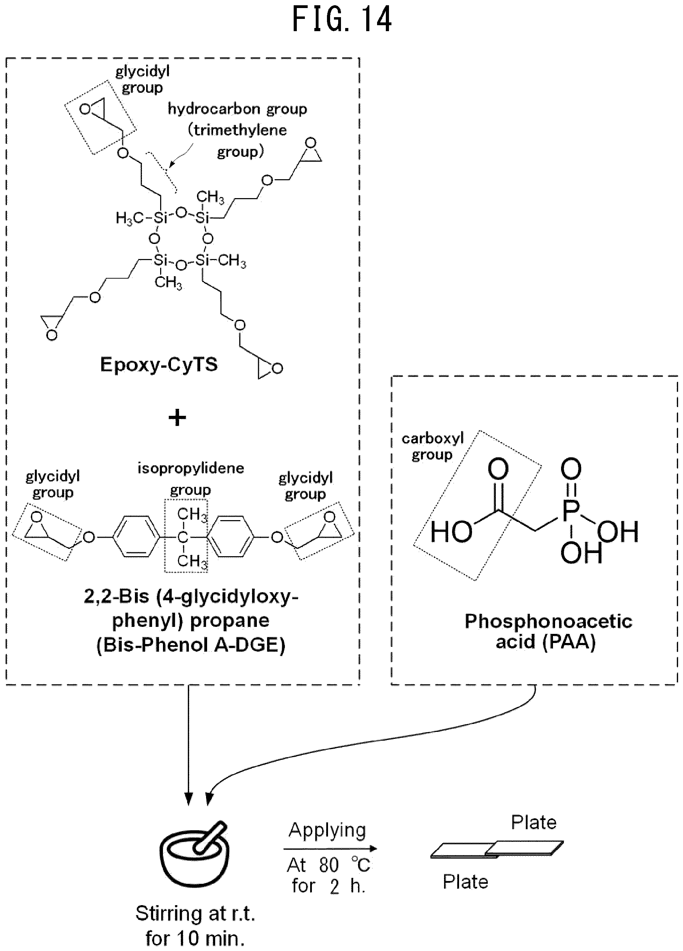

Next, the method of producing heat-curable compositions according to Example W is described below with reference to FIG. 14.

As the first component according to Example W, Epoxy-CyTS illustrated in FIG. 8 and Bis-Phenol A-DGE illustrated in FIG. 13 were prepared. On another front, phosphonoacetic acid, which was also used in Example O, was prepared as the second component according to Example W.

Subsequently, the first component consisting of Epoxy-CyTS and Bis-Phenol A-DGE, and the second component consisting of phosphonoacetic acid were ground and mixed using a mortar to obtain heat-curable compositions according to Example W.

Table 22 shows the production conditions of the heat-curable compositions according to Example W. In Table 22, the charged molar ratio, which is a molar ratio of Epoxy-CyTS, Bis-Phenol A-DGE, and phosphonoacetic acid at the time of mixing, is shown in parentheses < >. Further, in Table 22, the molar ratio to epoxy groups, which is a molar ratio of the second component with respect to the epoxy groups contained in the first component, is also shown.

**TABLE 22**

| | Charged molar ratio | | | Molar ratio of second component with respect to epoxy groups |
|---|---|---|---|---|
| | First component | | Second component | |
| | Epoxy-CyTS | Bis-Phenol A -DGE | Phosphonoacetic acid | |
| Example W1 | <1> | <1> | <2> | 0.33 (1/3) |
| Example W2 | <1> | <1> | <3> | 0.5 (1/2) |
| Example W3 | <1> | <1> | <4> | 0.66 (2/3) |
| Example W4 | <0.75> | <0.5> | <2> | 0.5 (1/2) |
| Example W5 | <0.5> | <1> | <2> | 0.5 (1/2) |
| Example W6 | <0.25> | <1.5> | <2> | 0.5 (1/2) |

### [Evaluation of Adhesiveness of Example W]

Using each heat-curable composition according to Examples W1 to W6 as an adhesive agent, evaluation samples in which substrates of the same material, Al-Al, were bonded together were prepared in the same manner as in Example A. The substrates, after the adhesive agent was applied thereto, were heated at 80°C for 2 hours in a state of being fixed with clips. The adhesion surfaces had an area of 25 mm². Subsequently, the shear stress was measured by conducting a tensile shear test in which the pair of substrates were pulled from each other in a direction parallel to the adhesion surfaces.

Table 23 shows the shear strength that is the maximum shear stress measured for each of the evaluation samples according to Examples W1 to W6. In Table 23, the area of the adhesion surfaces is shown in parentheses (). It is noted here that, with regard to the evaluation samples according to Examples W3, W5, and W6, the adhesion surfaces were not detached even with an application of the maximum tensile force outputtable by the tensile shear tester used.

**TABLE 23**

| | Shear strength |
|---|---|
| | Al-Al (25mm²) |
| Example W1 | 32.2 MPa |
| Example W2 | 40.1 MPa |
| Example W3 | ≥ 40.8 MPa |
| Example W4 | 26.68 MPa |
| Example W5 | ≥ 40.8 MPa |
| Example W6 | ≥ 40.8 MPa |

### [Evaluation of Impact Resistance of Example W]

Using each heat-curable composition according to Examples W1 to W6 as an adhesive agent, evaluation samples in which substrates of the same material, Al-Al, were bonded together were prepared in the same manner as in Example A. The adhesion surfaces had an area of 125 mm². Subsequently, for each of the thus prepared evaluation samples, an impact resistance test was conducted in the same manner as in Example A.

As a result, in all of the evaluation samples according to Examples W1 to W6, the adhesion surfaces were not detached even when hit with a hammer, and deformation of the aluminum substrates was observed. Particularly, the evaluation samples according to Examples W1, W3, W4, W5, and W6 withstood five blows with a hammer. As described above, sufficient impact resistance was confirmed for all of the evaluation samples according to Examples W1 to W6.

Thus far, embodiments and examples have been described. The following modifications can be made as well.

FIGS. 8, 12, and 13 illustrate examples of the second component consisting of a phenol, and FIG. 14 illustrates examples of the second component consisting of an acyclic aliphatic compound. As the second component, a phenol and an acyclic aliphatic compound may be used in combination. A phenol and an acyclic aliphatic compound have a commonality of containing a ring-opening functional group and are compatible with each other when mixed; therefore, it is possible to use a phenol and an acyclic aliphatic compound in combination as the second component.

Table 21 and FIG. 14 illustrate examples of a constitution in which a second component containing an acyclic aliphatic compound is combined with a first component containing a cyclic siloxane. The second component containing an acyclic aliphatic compound may be combined with a first component containing a linear siloxane. When mixed, the second component containing an acyclic aliphatic compound is compatible not only with the first component containing a cyclic siloxane but also with the first component containing a linear siloxane.

FIGS. 13 and 14 illustrate examples of the first component in which a bisphenol-type epoxy is used in combination with a cyclic siloxane. A first component in which a bisphenol-type epoxy is used in combination with a linear siloxane may be used as well. When mixed, the bisphenol-type epoxy is compatible with not only the cyclic siloxane but also with the linear siloxane.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2022-102086, filed on June 24, 2022, the entire disclosure of which is incorporated by reference herein.

### Industrial Applicability

The heat-curable composition according to the present disclosure can be used as, for example, an adhesive agent. The use of the heat-curable composition according to the present disclosure is not limited to an adhesive agent. The heat-curable composition according to the present disclosure and a cured product obtained by curing the heat-curable composition can also be used in various applications, such as optical semiconductor element sealing materials, optical elements, optical lenses, optical members, stereolithography materials, electrical insulating materials, laminates, coating materials, sealant materials, resists, transparent substrates, transparent sheets, and transparent films.

## Claims

1. A heat-curable composition, comprising:
a first component that contains a siloxane having an epoxy group; and
a second component that contains at least one of a phenol having a structure in which a ring-opening functional group (excluding a hydroxy group) that is a functional group having an action of ring-opening the epoxy group is bound to a benzene ring, or an acyclic aliphatic compound having a structure in which the ring-opening functional group is bound to an end.

2. The heat-curable composition according to claim 1, wherein the siloxane constituting the first component is a cyclic or linear siloxane that has plural side chains containing the epoxy group.

3. The heat-curable composition according to claim 2, wherein the side chains each contain a chain hydrocarbon group between a silicon atom constituting a siloxane bond in the siloxane and the epoxy group.

4. The heat-curable composition according to claim 1, wherein
the first component further contains a bisphenol-type epoxy having a structure in which an epoxy-containing group containing an epoxy group is introduced to each of a pair of phenyl groups constituting a bisphenol, and
the ring-opening functional group has an action of ring-opening not only the epoxy group of the siloxane but also the epoxy group of the bisphenol-type epoxy.

5. The heat-curable composition according to claim 1, wherein, based on a position of a carbon atom to which the ring-opening functional group is bound in the benzene ring constituting the phenol, a phenolic hydroxy group is bound to at least one of carbon atoms at the 3-position, the 4-position, and the 5-position.

6. The heat-curable composition according to claim 5, wherein only hydrogen atoms are bound to carbon atoms at the 2-position and the 6-position of the benzene ring constituting the phenol.

7. The heat-curable composition according to claim 1, wherein the ring-opening functional group is a carboxy group.

8. The heat-curable composition according to claim 1, wherein the acyclic aliphatic compound further contains a hydroxy group.

9. The heat-curable composition according to any one of claims 1 to 8, wherein a molar ratio of the second component with respect to the epoxy group contained in the first component is higher than 0 but 1 or lower.

10. A cured article, obtained by curing the heat-curable composition according to any one of claims 1 to 8.

11. An adhesive agent, comprising the heat-curable composition according to any one of claims 1 to 8,
wherein the first component and the second component exist in the form of a mixture thereof.

12. An adhesive agent, comprising the heat-curable composition according to any one of claims 1 to 8,
wherein the first component and the second component exist in a state of being separated from each other, and are mixed at the time of use.

13. A heat-curable composition production method, comprising:
a first component preparation step of preparing a first component that contains a siloxane having an epoxy group;
a second component preparation step of preparing a second component that contains at least one of a phenol having a structure in which a ring-opening functional group (excluding a hydroxy group) that is a functional group having an action of ring-opening the epoxy group is bound to a benzene ring, or an acyclic aliphatic compound having a structure in which the ring-opening functional group is bound to an end; and
a mixing step of mixing the first component and the second component.
